(19) Europäisches Patentamt / European Patent Office / Office européen des brevets

(11) **EP 4 462 313 A1**

(12) **EUROPEAN PATENT APPLICATION**
published in accordance with Art. 153(4) EPC

(43) Date of publication:
**13.11.2024  Bulletin 2024/46**

(21) Application number: **23746144.7**

(22) Date of filing: **17.01.2023**

(51) International Patent Classification (IPC):
*G06N 3/08* (2023.01)

(52) Cooperative Patent Classification (CPC):
**G06N 3/04; G06N 3/08; G06N 3/082**

(86) International application number:
**PCT/CN2023/072655**

(87) International publication number:
**WO 2023/143262 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.01.2022  CN 202210111721**

(71) Applicant: **Huawei Technologies Co., Ltd.**
**Shenzhen, Guangdong 518129 (CN)**

(72) Inventors:
• **ZHOU, Pingyi**
  **Shenzhen, Guangdong 518129 (CN)**

• **REN, Xiaozhe**
  **Shenzhen, Guangdong 518129 (CN)**
• **WANG, Yasheng**
  **Shenzhen, Guangdong 518129 (CN)**
• **HE, Bin**
  **Shenzhen, Guangdong 518129 (CN)**
• **MENG, Xinfan**
  **Shenzhen, Guangdong 518129 (CN)**
• **JIANG, Xin**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **DATA PROCESSING METHOD AND RELATED DEVICE**

(57)    This application relates to the artificial intelligence field, and discloses a data processing method. The method includes: processing target data through a target neural network to obtain a data processing result, where a target header of the target neural network is used to process, through a first transformation matrix, a first vector corresponding to first subdata, and process, through a second transformation matrix, a second vector corresponding to the first subdata, where the first vector corresponds to position information of the first subdata in the target data, and the second vector corresponds to semantic information of the first subdata. In this application, a matrix size of a transformation matrix corresponding to a position vector is set to be less than a size of a matrix corresponding to a semantic vector. To be specific, a size of the first transformation matrix is less than a size of the second transformation matrix. This can reduce a size of a transformation matrix used for calculating a correlation between position information, to reduce computing resource overheads of a model during inference or training.

FIG. 11a

**Description**

This application claims priority to Chinese Patent Application No. 202210111721.4, filed with the China National Intellectual Property Administration on January 29, 2022 and entitled "DATA PROCESSING METHOD AND RELATED DEVICE", which is incorporated herein by reference in its entirety.

**TECHNICAL FIELD**

This application relates to the artificial intelligence field, and in particular, to a data processing method and a related device.

**BACKGROUND**

Artificial intelligence (artificial intelligence, AI) is a theory, a method, a technology, and an application system in which human intelligence is simulated and extended by using a digital computer or a machine controlled by a digital computer, to perceive an environment, obtain knowledge, and achieve an optimal result by using the knowledge. In other words, the artificial intelligence is a branch of computer science and is intended to understand essence of intelligence and produce a new intelligent machine that can react in a manner similar to human intelligence. The artificial intelligence is to study design principles and implementation methods of various intelligent machines, so that the machines have perception, inference, and decision-making functions.

With continuous development of artificial intelligence technologies, a natural language-based human-computer interaction system that enables human-computer interaction through a natural language becomes increasingly important. To enable human-computer interaction through a natural language, the system needs to recognize a specific meaning of the human natural language. Usually, the system extracts key information from a sentence in the natural language to recognize a specific meaning of the sentence.

A transformer structure has a powerful semantic expression capability, and can capture a long-range dependency in text. Since the transformer structure was proposed, the transformer structure has significantly outperformed previous models in a series of natural language processing tasks represented by translation. A pre-trained language model based on the transformer structure has also achieved quite good effect in the fields of question answering systems, voice assistants, and the like.

In recent years, a large quantity of studies have shown that a pre-trained model based on a large corpus may learn universal modal representations of languages, images, vision, and the like. Based on the pre-trained model obtained through training, quite good task performance can be achieved directly through finetuning (finetune) by using data of a downstream task. This avoids training a model from the beginning. A pre-trained model based on a larger corpus and a larger scale of parameters continuously refreshes best performance in various tasks. In addition, with continuous improvement of a computing capability of a chip, a continuous increase of communication bandwidth, and continuous optimization of training, how to quickly train a pre-trained model based on a transformer architecture in a distributed manner in a large device cluster with a higher computing capability and a memory limitation, for example, a neural network processor, is a problem that urgently needs to be resolved.

**SUMMARY**

This application provides a data processing method and a related apparatus, to reduce a size of a transformation matrix used for calculating a correlation between position information, and reduce computing resource overheads of a transformer model during inference or training.

According to a first aspect, this application provides a data processing method. The method includes: obtaining target data, where the target data includes first subdata; and processing the target data through a target neural network to obtain a data processing result, where the target neural network includes an attention layer, the attention layer includes a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix.

In a conventional implementation, a size of a transformation matrix corresponding to a semantic vector of subdata is completely consistent with a size (or described as a dimension) of a transformation matrix corresponding to a position vector. The being completely consistent herein may be understood as that quantities of parameters included in the transformation matrices are consistent. For example, lengths or widths may be completely consistent.

However, with a continuous increase of an amount of the target data, a quantity of subdata continuously increases, a quantity of transformer layers and a quantity of attention heads included in each transformer layer continuously increase, and a quantity of transformation matrices also continuously increases. When a size of a transformation matrix is large, a quantity of to-be-trained parameters in the transformation matrix also continuously increases, and the transformation matrix also occupies a quite large quantity of storage resources. This greatly increases computing resource overheads of a transformer model during both inference and training.

In this embodiment of this application, a matrix size of a transformation matrix corresponding to a position vector is set to be less than a size of a matrix corresponding to a semantic vector. To be specific, the size of the first transformation matrix is less than the size of the second transformation matrix. Compared with the conventional technology in which a positional correlation between subdata is not calculated or a correlation between positions is indicated by a scalar, in this embodiment of this application, a correlation between positions is still obtained by performing an operation on a transformation matrix and a position vector, so that accuracy of a correlation between subdata can be increased, and a model convergence speed during training can be increased. In addition, during calculation of a correlation between positions, a size of a transformation matrix used for calculating a correlation between position information is reduced, to reduce computing resource overheads of the transformer model during inference or training.

It should be understood that, in this embodiment of this application, a specific process of calculating a correlation between positions needs to be mapped to an operator operation graph and corresponding hardware, for example, a neural network chip, for implementation. A quantity of operation parameters is reduced to reduce a quantity of computing units used in the hardware and computing power overheads.

In a possible implementation, the target neural network is used to implement at least one of the following types of tasks:

reading comprehension, text translation, paraphrase recognition, named entity recognition, text-based sentiment analysis, natural language inference, automatic text-based question answering, text intent recognition, text classification, text simplification, or text-based story generation.

In a possible implementation, the target data may be text data. When the target data is input to the transformer model, a header at a transformer layer in the transformer model may calculate a correlation (for example, $\alpha_{i,j}$ in a formula (1)) between a plurality of pieces of subdata (for example, the first subdata and second subdata in this embodiment of this application) in the target data. The subdata may be a word unit or a phrase unit.

In a possible implementation, the target data may be image data, for example, a patch sequence. When the target data is input to the transformer model, a header at a transformer layer in the transformer model may calculate a correlation (for example, $\alpha_{i,j}$ in a formula (1)) between a plurality of pieces of subdata (for example, the first subdata and second subdata in this embodiment of this application) in the target data. The subdata may be image block data.

In a possible implementation, the target data may be audio data. When the target data is input to the transformer model, a header at a transformer layer in the transformer model may calculate a correlation (for example, $\alpha_{i,j}$ in a formula (1)) between a plurality of pieces of subdata (for example, the first subdata and second subdata in this embodiment of this application) in the target data. The subdata may be audio segment data.

In a possible implementation, the target data further includes second subdata different from the first subdata;

the target header is specifically used to process, through the first transformation matrix, the first vector corresponding to the first subdata, to obtain first intermediate output; and

the target header is further used to: process, through a third transformation matrix, a third vector corresponding to the second subdata, to obtain second intermediate output, where the third vector corresponds to position information of the second subdata in the target data; and

obtain a first correlation between the first intermediate output and the second intermediate output, where the first correlation indicates a correlation between the position information of the first subdata in the target data and the position information of the second subdata in the target data.

In a possible implementation, a size of the third transformation matrix is less than the size of the second transformation matrix.

In a possible implementation, sizes of transformation matrices corresponding to position vectors of all subdata in a correlation between position information of a plurality of pieces of subdata are consistent. For example, the plurality of pieces of subdata may include the first subdata and the second subdata. In this case, during calculation of the correlation between the position information of the first subdata and the position information of the second subdata, a size of a transformation matrix corresponding to a position vector of the first subdata is consistent with a size of a transformation size corresponding to a position vector of the second subdata. Certainly, the size of the transformation matrix corresponding to the position vector of the first subdata is less than a size of a transformation matrix corresponding to a semantic vector of the first subdata, and the size of the transformation matrix corresponding to the position vector of the second subdata is less than a size of a transformation matrix corresponding to a semantic vector of the second subdata.

In a possible implementation, the target header is specifically used to process, through the second transformation matrix, the second vector corresponding to the first subdata, to obtain third intermediate output; and

the target header is further used to: process, through a fourth transformation matrix, a fourth vector corresponding to the second subdata, to obtain fourth intermediate output, where the fourth vector corresponds to semantic information of the second subdata; and
obtain a second correlation between the third intermediate output and the fourth intermediate output, where the second correlation indicates a correlation between the semantic information of the first subdata and the semantic information of the second subdata.

In a possible implementation, the first vector corresponds to an absolute position of the first subdata in the target data.

In a possible implementation, the first vector corresponds to a relative position of the first subdata in the target data relative to the second subdata; and/or
the third vector corresponds to a relative position of the second subdata in the target data relative to the first subdata.

In a possible implementation, during calculation of a correlation between position information of subdata, if only a correlation between absolute position information is calculated, the correlation between the absolute position information may be directly represented by a trainable scalar.

The first subdata and the second subdata are used as examples. In a possible implementation, the target header is further used to determine a target scalar from a pre-trained scalar set, where different scalars in the scalar set indicate correlations between absolute positions of different groups of subdata in the target data, and the target scalar indicates a third correlation between an absolute position of the first subdata in the target data and an absolute position of the second subdata in the target data.

A correlation between absolute positions is represented by a trainable scalar. This is equivalent to skipping calculating the correlation between the absolute positions through a transformation matrix. This can reduce computing resource overheads during calculation.

In a possible implementation, during calculation of a correlation between position information of a plurality of pieces of subdata, a corresponding position vector may be set for each group of subdata.

In a possible implementation, the target data further includes third subdata different from the first subdata. For example, the plurality of pieces of subdata include the first subdata and the third subdata. One vector (for example, a first vector) may be set to represent position information (relative positions or absolute positions) of the first subdata and the third subdata. To be specific, the first vector corresponds to position information of the first subdata in the target data and position information of the third subdata in the target data.

In a possible implementation, the position information includes an absolute position of the first subdata in the target data and an absolute position of the third subdata in the target data.

In a possible implementation, the position information includes a relative position of the first subdata in the target data relative to the third subdata, and a relative position of the third subdata in the target data relative to the first subdata.

In a possible implementation, the target header is specifically used to process, through the first transformation matrix, the first vector corresponding to the first subdata, to obtain fifth intermediate output, where the fifth intermediate output indicates a fourth correlation between the position information of the first subdata in the target data and the position information of the third subdata in the target data.

In this embodiment of this application, a corresponding transformation matrix may be correspondingly set for a position vector of a group of subdata. To be specific, only one position vector and one transformation matrix corresponding to the position vector are used for calculating a correlation between position information of a group of subdata. For example, a corresponding transformation matrix (the first transformation matrix) may be correspondingly set for a position vector (the first vector) of a group of subdata (the first subdata and the third subdata).

It should be understood that, in a possible implementation, during calculation of a correlation between position information of a plurality of pieces of subdata, a corresponding position vector and a corresponding transformation matrix may be set for each group of subdata, and a size of the transformation matrix may be consistent with a size of a transformation matrix used for calculating a correlation between semantic information.

In the foregoing manner, compared with the conventional technology in which a positional correlation between subdata is not calculated or a correlation between positions is indicated by a scalar, in this embodiment of this application, a correlation between positions is still obtained by performing an operation on a transformation matrix and a position vector, so that accuracy of a correlation between subdata can be increased, and a model convergence speed during training can be increased. In addition, during calculation of a correlation between positions, a quantity of transformation matrices used for calculating a correlation between position information is reduced, to reduce computing resource overheads of the transformer model during inference or training.

In a possible implementation, the size of the first transformation matrix is less than a half of the size of the second transformation matrix.

According to a second aspect, this application provides a data processing method. The method includes:

receiving a performance requirement sent by a terminal side, where the performance requirement indicates a performance requirement of a neural network, and the performance requirement includes at least one of the following: data processing accuracy and a model size;
obtaining, according to the performance requirement, a target neural network that meets the performance requirement, where the target neural network includes an attention layer, the attention layer includes a target attention head (header), the target attention head (header) is used to process a first vector of first subdata through a first transformation matrix, the first subdata belongs to target data, the first vector corresponds to position information of the first subdata in the target data, and a size of the first transformation matrix is related to the data processing accuracy or the model size; and
sending the target neural network to the terminal side.

It can be learned from the foregoing embodiment that, when the size of the first transformation matrix is less than a size of a second transformation matrix, a size of a transformation matrix used for calculating a correlation between position information is reduced, to reduce computing resource overheads of a model during inference or training. However, a smaller size of a matrix leads to a corresponding decrease of accuracy of the model.

In this embodiment of this application, a model that meets a user requirement for accuracy and/or a model size may be obtained according to a specific user requirement through searching by adjusting a size of a transformation matrix.

In a possible implementation, the target attention head (header) may be any header in the target neural network. The foregoing transformation matrix search process may be performed on each header in the target neural network.

In a possible implementation, the target neural network is used to implement at least one of the following types of tasks:

reading comprehension, text translation, paraphrase recognition, named entity recognition, text-based sentiment analysis, natural language inference, automatic text-based question answering, text intent recognition, text classification, text simplification, or text-based story generation.

In a possible implementation, the target attention head (header) is further used to process a second vector of the first subdata through a second transformation matrix, the second vector corresponds to semantic information of the first subdata, and the size of the first transformation matrix is less than a size of the second transformation matrix.

In a possible implementation, the target data further includes second subdata different from the first subdata; and

the first vector corresponds to an absolute position of the first subdata in the target data; or
the first vector corresponds to a relative position of the first subdata in the target data relative to the second subdata; or
the first vector corresponds to an absolute position of the first subdata in the target data and an absolute position of the second subdata in the target data; or
the first vector corresponds to a relative position of the first subdata in the target data relative to the second subdata, and a relative position of the second subdata in the target data relative to the first subdata.

According to a third aspect, this application provides a data processing method. The method includes:

receiving a performance requirement sent by a terminal side, where the performance requirement indicates a performance requirement of a neural network, and the performance requirement includes at least one of the following: data processing accuracy and a model size;
obtaining, according to the performance requirement, a target neural network that meets the performance requirement, where the target neural network includes an attention layer, the attention layer includes a target attention head (header), the target attention head (header) is used to calculate a correlation between position information of first subdata and position information of second subdata by using a target method, and the target method is a method selected from some or all of the following methods according to the performance requirement:

processing a first vector and a second vector by using different transformation matrices, where the first vector corresponds to the position information of the first subdata, and the second vector corresponds to the position information of the second subdata; or
processing a third vector by using a same transformation matrix, where the third vector corresponds to position information of the first subdata in the target data and position information of third subdata in the target data; or
determining a target scalar from a pre-trained scalar set, where different scalars in the scalar set indicate correlations between position information of different groups of subdata in the target data, and the target scalar indicates a correlation between position information of the first subdata in the target data and position information of the second subdata in the target data; and

sending the target neural network to the terminal side.

It can be learned from the foregoing embodiment that, when one corresponding position vector and one transformation matrix are set for each group of subdata, a quantity of transformation matrices used for calculating a correlation between position information can be reduced, to reduce computing resource overheads of a model during inference or training. However, a smaller quantity of matrices leads to a corresponding decrease of accuracy of the model.

It can be learned from the foregoing embodiment that, when a corresponding position vector and a corresponding transformation matrix are set for each piece of subdata in each group of subdata, although a quantity of transformation matrices used for calculating a correlation between position information cannot be reduced, a larger quantity of matrices contributes to a corresponding increase of accuracy of the model.

It can be learned from the foregoing embodiment that, when a correlation between position information is represented by a trainable target scalar, computing resource overheads of the model during inference or training can be reduced, but accuracy of the model correspondingly decreases.

In this embodiment of this application, a model that meets a user requirement for accuracy and/or a model size may be obtained according to a specific user requirement by searching for a header processing mode.

According to a fourth aspect, this application provides a data processing apparatus. The apparatus includes:

an obtaining module, configured to obtain target data, where the target data includes first subdata; and
a data processing module, configured to process the target data through a target neural network to obtain a data processing result, where the target neural network includes an attention layer, the attention layer includes a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix.

In a conventional implementation, a size of a transformation matrix corresponding to a semantic vector of subdata is completely consistent with a size (or described as a dimension) of a transformation matrix corresponding to a position vector. The being completely consistent herein may be understood as that quantities of parameters included in the transformation matrices are consistent. For example, lengths or widths may be completely consistent.

However, with a continuous increase of an amount of the target data, a quantity of subdata continuously increases, a quantity of transformer layers and a quantity of attention heads included in each transformer layer continuously increase, and a quantity of transformation matrices also continuously increases. When a size of a transformation matrix is large, a quantity of to-be-trained parameters in the transformation matrix also continuously increases, and the transformation matrix also occupies a quite large quantity of storage resources. This greatly increases computing resource overheads of a transformer model during both inference and training.

In this embodiment of this application, a matrix size of a transformation matrix corresponding to a position vector is set to be less than a size of a matrix corresponding to a semantic vector. To be specific, the size of the first transformation matrix is less than the size of the second transformation matrix. Compared with the conventional technology in which a positional correlation between subdata is not calculated or a correlation between positions is indicated by a scalar, in this embodiment of this application, a correlation between positions is still obtained by performing an operation on a transformation matrix and a position vector, so that accuracy of a correlation between subdata can be increased, and a model convergence speed during training can be increased. In addition, during calculation of a correlation between positions, a size of a transformation matrix used for calculating a correlation between position information is reduced, to reduce computing resource overheads of the transformer model during inference or training.

In a possible implementation, the target data is text data, and the first data is a word unit or a phrase unit; or the target data is image data, and the first data is image block data.

In a possible implementation, the target data further includes second subdata different from the first subdata;

the target header is specifically used to process, through the first transformation matrix, the first vector corresponding to the first subdata, to obtain first intermediate output; and
the target header is further used to: process, through a third transformation matrix, a third vector corresponding to the second subdata, to obtain second intermediate output, where the third vector corresponds to position information of the second subdata in the target data; and
obtain a first correlation between the first intermediate output and the second intermediate output, where the first correlation indicates a correlation between the position information of the first subdata in the target data and the position information of the second subdata in the target data.

In a possible implementation, a size of the third transformation matrix is less than the size of the second transformation matrix.

In a possible implementation, the size of the first transformation matrix is the same as the size of the third transformation matrix.

In a possible implementation, the target header is specifically used to process, through the second transformation matrix, the second vector corresponding to the first subdata, to obtain third intermediate output; and

the target header is further used to: process, through a fourth transformation matrix, a fourth vector corresponding to the second subdata, to obtain fourth intermediate output, where the fourth vector corresponds to semantic information of the second subdata; and

obtain a second correlation between the third intermediate output and the fourth intermediate output, where the second correlation indicates a correlation between the semantic information of the first subdata and the semantic information of the second subdata.

In a possible implementation, the first vector corresponds to an absolute position of the first subdata in the target data.

In a possible implementation, the first vector corresponds to a relative position of the first subdata in the target data relative to the second subdata; and/or

the third vector corresponds to a relative position of the second subdata in the target data relative to the first subdata.

In a possible implementation, the target header is further used to determine a target scalar from a pre-trained scalar set, where

different scalars in the scalar set indicate correlations between absolute positions of different groups of subdata in the target data, and the target scalar indicates a third correlation between an absolute position of the first subdata in the target data and an absolute position of the second subdata in the target data.

In a possible implementation, the target data further includes third subdata different from the first subdata, and the first vector corresponds to position information of the first subdata in the target data and position information of the third subdata in the target data.

In a possible implementation, the target header is specifically used to process, through the first transformation matrix, the first vector corresponding to the first subdata, to obtain fifth intermediate output, where the fifth intermediate output indicates a fourth correlation between the position information of the first subdata in the target data and the position information of the third subdata in the target data.

In a possible implementation, the position information includes an absolute position of the first subdata in the target data and an absolute position of the third subdata in the target data; or

the position information includes a relative position of the first subdata in the target data relative to the third subdata, and a relative position of the third subdata in the target data relative to the first subdata.

In a possible implementation, the size of the first transformation matrix is less than a half of the size of the second transformation matrix.

According to a fifth aspect, this application provides a data processing apparatus. The apparatus includes:

an obtaining module, configured to receive a performance requirement sent by a terminal side, where the performance requirement indicates a performance requirement of a neural network, and the performance requirement includes at least one of the following: data processing accuracy and a model size;

a model determining module, configured to obtain, according to the performance requirement, a target neural network that meets the performance requirement, where the target neural network includes an attention layer, the attention layer includes a target attention head (header), the target attention head (header) is used to process a first vector of first subdata through a first transformation matrix, the first subdata belongs to target data, the first vector corresponds to position information of the first subdata in the target data, and a size of the first transformation matrix is related to the data processing accuracy or the model size; and

a sending module, configured to send the target neural network to the terminal side.

In a possible implementation, the target attention head (header) is further used to process a second vector of the first subdata through a second transformation matrix, the second vector corresponds to semantic information of the first subdata, and the size of the first transformation matrix is less than a size of the second transformation matrix.

In a possible implementation, the target data further includes second subdata different from the first subdata; and

the first vector corresponds to an absolute position of the first subdata in the target data; or

the first vector corresponds to a relative position of the first subdata in the target data relative to the second subdata; or

the first vector corresponds to an absolute position of the first subdata in the target data and an absolute position of the second subdata in the target data; or

the first vector corresponds to a relative position of the first subdata in the target data relative to the second subdata, and a relative position of the second subdata in the target data relative to the first subdata.

According to a sixth aspect, this application provides a data processing apparatus. The apparatus includes:

an obtaining module, configured to receive a performance requirement sent by a terminal side, where the performance requirement indicates a performance requirement of a neural network, and the performance requirement includes at least one of the following: data processing accuracy and a model size;

a model determining module, configured to obtain, according to the performance requirement, a target neural network that meets the performance requirement, where the target neural network includes an attention layer, the attention layer includes a target attention head (header), the target attention head (header) is used to calculate a correlation between position information of first subdata and position information of second subdata by using a target apparatus, and the target apparatus is an apparatus selected from at least one of the following apparatuses according to the performance requirement:

processing a first vector and a second vector by using different transformation matrices, where the first vector corresponds to the position information of the first subdata, and the second vector corresponds to the position information of the second subdata; or

processing a third vector by using a same transformation matrix, where the third vector corresponds to position information of the first subdata in the target data and position information of third subdata in the target data; or determining a target scalar from a pre-trained scalar set, where different scalars in the scalar set indicate correlations between position information of different groups of subdata in the target data, and the target scalar indicates a correlation between position information of the first subdata in the target data and position information of the second subdata in the target data; and

a sending module, configured to send the target neural network to the terminal side.

According to a seventh aspect, an embodiment of this application provides a data processing apparatus that may include a memory, a processor, and a bus system. The memory is configured to store a program. The processor is configured to execute the program in the memory to perform the method according to any one of the first aspect or the optional implementations of the first aspect, the method according to any one of the second aspect or the optional implementations of the second aspect, or the method according to any one of the third aspect or the optional implementations of the third aspect.

According to an eighth aspect, an embodiment of this application provides a data processing apparatus that may include a memory, a processor, and a bus system. The memory is configured to store a program. The processor is configured to execute the program in the memory to perform the method according to any one of the first aspect or the optional implementations of the first aspect, the method according to any one of the second aspect or the optional implementations of the second aspect, or the method according to any one of the third aspect or the optional implementations of the third aspect.

According to a ninth aspect, an embodiment of this application provides a computer-readable storage medium. The computer-readable storage medium stores a computer program. When the computer program is run on a computer, the computer is enabled to perform the method according to any one of the first aspect or the optional implementations of the first aspect, the method according to any one of the second aspect or the optional implementations of the second aspect, or the method according to any one of the third aspect or the optional implementations of the third aspect.

According to a tenth aspect, an embodiment of this application provides a computer program. When the computer program is run on a computer, the computer is enabled to perform the method according to any one of the first aspect or the optional implementations of the first aspect, the method according to any one of the second aspect or the optional implementations of the second aspect, or the method according to any one of the third aspect or the optional implementations of the third aspect.

According to an eleventh aspect, this application provides a chip system. The chip system includes a processor, configured to support an execution device or a training device in implementing functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

An embodiment of this application provides a data processing method. The method includes: obtaining target data, where the target data includes first subdata; and processing the target data through a target neural network to obtain a data processing result, where the target neural network includes an attention layer, the attention layer includes a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix. In this embodiment of this application, a matrix size of a transformation matrix corresponding to a position vector is set to be less than a size of a matrix corresponding to a semantic vector. To be specific, the size of the first transformation matrix is less than the size of the second transformation matrix. Compared with the conventional technology in which a positional correlation between subdata is not calculated or a correlation between positions is indicated by a scalar, in this embodiment of this application, a correlation between positions is still obtained by performing an operation on a transformation matrix and a position vector, so that accuracy of a correlation between subdata can be increased, and a model convergence speed during training can be increased. In addition, during calculation of a correlation between positions, a size of a transformation matrix used for calculating a correlation between position information is reduced, to reduce computing resource overheads of the transformer model during inference or training.

It should be understood that the methods and apparatuses described in the foregoing aspects may be mutually referenced, combined, and used for interpretation without technical conflicts.

BRIEF DESCRIPTION OF DRAWINGS

FIG. 1 is a diagram of a structure of a main artificial intelligence framework;
FIG. 2 shows a neural network search system;
FIG. 3 shows a neural network search system;
FIG. 4 shows a neural network search system;
FIG. 5 shows a neural network search system;
FIG. 6 shows a natural language processing system;
FIG. 7 shows a natural language processing system;
FIG. 8 is a diagram of a device related to natural language processing according to an embodiment of this application;
FIG. 9 is a diagram of a transformer model;
FIG. 10 is a diagram of a structure of a system architecture according to an embodiment of this application;
FIG. 11a is a diagram of an embodiment of a data processing method according to an embodiment of this application;
FIG. 11b is a diagram of a structure of a transformer model;
FIG. 12 is a diagram of a structure of a transformer layer;
FIG. 13 is a diagram of a structure of a target attention head according to an embodiment of this application;
FIG. 14 is a diagram of an embodiment of calculating a correlation between position information according to an embodiment of this application;
FIG. 15 is a diagram of an embodiment of calculating a correlation between position information according to an embodiment of this application;
FIG. 16 is a diagram of an embodiment of calculating a correlation between position information according to an embodiment of this application;
FIG. 17 is a diagram of an embodiment of calculating a correlation between position information according to an embodiment of this application;
FIG. 18 is a diagram of an embodiment of calculating a correlation between position information according to an embodiment of this application;
FIG. 19 is a diagram of an embodiment of calculating a correlation between position information according to an embodiment of this application;
FIG. 20 is a diagram of an embodiment of calculating a correlation between position information according to an embodiment of this application;
FIG. 21 is a diagram of an embodiment of calculating a correlation between position information according to an embodiment of this application;
FIG. 22 is a diagram of an embodiment of calculating a correlation between position information according to an embodiment of this application;
FIG. 23 is a diagram of an embodiment of calculating a correlation between position information according to an embodiment of this application;
FIG. 24 is a diagram of an embodiment of calculating a correlation between position information according to an embodiment of this application;
FIG. 25 is a diagram of an embodiment of calculating a correlation between position information according to an embodiment of this application;

FIG. 26 is a diagram of an embodiment of a data processing method according to an embodiment of this application;
FIG. 27 is a diagram of an embodiment of a data processing method according to an embodiment of this application;
FIG. 28 is a diagram of an embodiment of a data processing apparatus according to an embodiment of this application;
FIG. 29 is a diagram of an embodiment of a data processing apparatus according to an embodiment of this application;
FIG. 30 is a diagram of an embodiment of a data processing apparatus according to an embodiment of this application;
FIG. 31 is a diagram of a structure of an execution device according to an embodiment of this application;
FIG. 32 is a diagram of a structure of a training device according to an embodiment of this application; and
FIG. 33 is a diagram of a structure of a chip according to an embodiment of this application.

## DESCRIPTION OF EMBODIMENTS

The following describes embodiments of the present invention with reference to accompanying drawings in embodiments of the present invention. Terms used in embodiments of the present invention are merely intended to describe specific embodiments of the present invention, and not to limit the present invention.

The following describes embodiments of this application with reference to accompanying drawings. A person of ordinary skill in the art can know that technical solutions provided in embodiments of this application are also applicable to similar technical problems with development of technologies and emergence of new scenarios.

In the specification, claims, and accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, method, system, product, or device that includes a list of units is not necessarily limited to those units, but may include other units that are not expressly listed or are inherent to the process, method, product, or device.

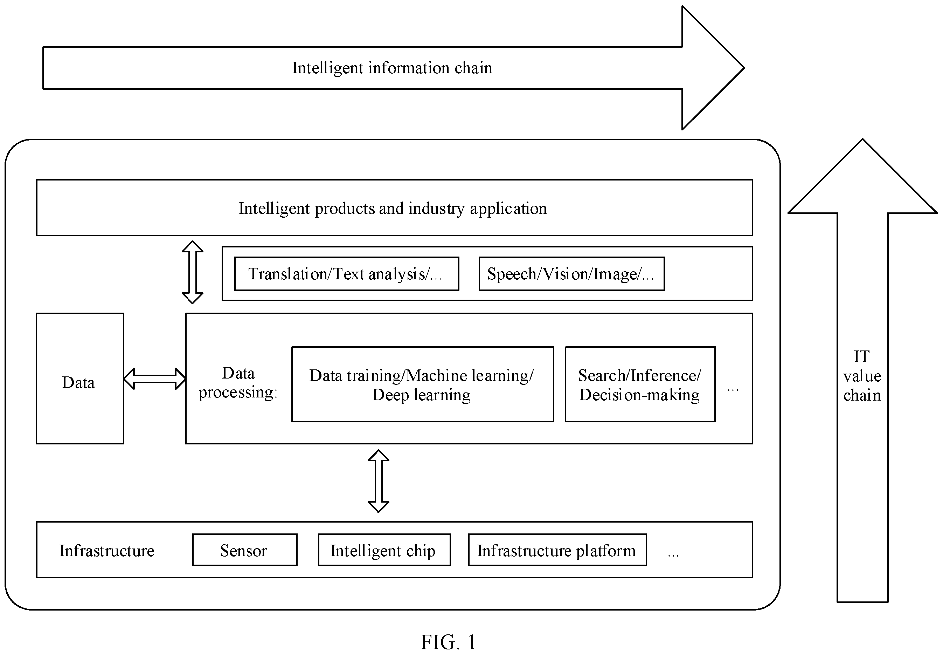

First, an overall operation process of an artificial intelligence system is described. FIG. 1 is a diagram of a structure of a main artificial intelligence framework. The following describes the main artificial intelligence framework from two dimensions: "intelligent information chain" (a horizontal axis) and "IT value chain" (a vertical axis). The "intelligent information chain" indicates a process from data obtaining to data processing. For example, the "intelligent information chain" may be a general process of intelligent information perception, intelligent information representation and formation, intelligent inference, intelligent decision-making, and intelligent execution and output. In this process, data undergoes a refining process of "data - information - knowledge - intelligence". The "IT value chain" is an industrial ecological process from underlying infrastructure of artificial intelligence to information (providing and processing technical implementations) to a system, and indicates value brought by artificial intelligence to the information technology industry.

(1) Infrastructure

Infrastructure provides computing capability support for the artificial intelligence system, to communicate with the outside world and implement support by using an infrastructure platform. Communication with the outside is performed through a sensor. A computing capability is provided by an intelligent chip (a hardware acceleration chip, for example, a CPU, an NPU, a GPU, an ASIC, or an FPGA). The infrastructure platform includes platform assurance and support related to a distributed computing framework, a network, and the like, and may include cloud storage and computing, an interconnection network, and the like. For example, the sensor communicates with the outside to obtain data, and the data is provided for an intelligent chip in a distributed computing system provided by the infrastructure platform to perform computation.

(2) Data

Data at an upper layer of the infrastructure indicates a data source in the field of artificial intelligence. The data relates to graphics, images, speech, and text, and further relates to internet of things data of conventional devices, and includes service data of a conventional system and perception data such as force, displacement, a liquid level, temperature, and humidity.

(3) Data processing

Data processing usually includes data training, machine learning, deep learning, searching, inference, decision-making, and other methods.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. Typical functions are searching and matching.

The decision-making is a process of making a decision after intelligent information is inferred, and usually provides classification, sorting, prediction, and other functions.

(4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent products and industry application

Intelligent products and industry application are products and application of the artificial intelligence system in various fields, are obtained by encapsulating an overall artificial intelligence solution, and implement productization and practical application of intelligent information decision-making. Application fields of the artificial intelligence system include intelligent terminals, intelligent transportation, intelligent healthcare, autonomous driving, a smart city, and the like.

This application may be applied to but is not limited to the natural language processing field in the artificial intelligence field, and may be specifically applied to the neural network search field in the natural language processing field, the neural network inference field in the natural language processing field, and the like. The following describes a plurality of application scenarios in which a plurality of products are implemented.

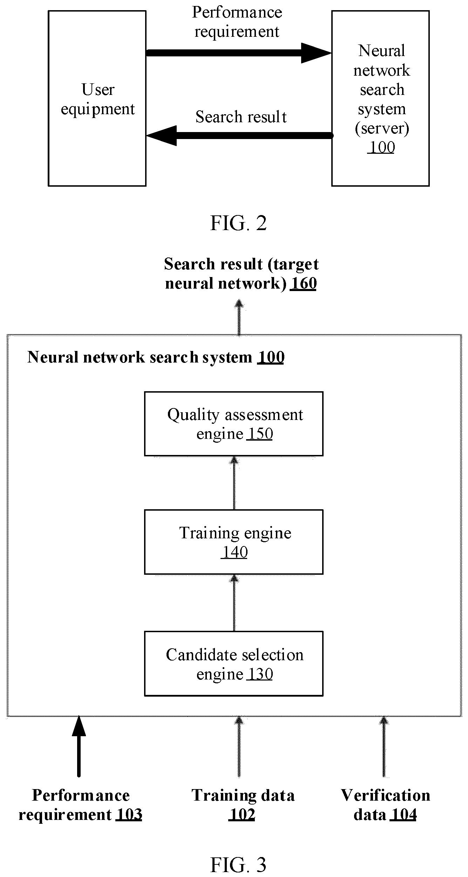

For ease of understanding solutions in embodiments of this application, the following first briefly describes possible application scenarios of embodiments of this application with reference to FIG. 2 to FIG. 8.

Scenario 1: Neural network search

As shown in FIG. 2, this application may be applied to a service related to neural network search, and the service may be specifically a neural network architecture search service provided by a cloud-side server. A user may transfer, by using user equipment, information related to model search to a cloud-side neural network search system (for example, a cloud server). The information related to model search may be a performance requirement of the user for a searched model, or the like. Then, the cloud-side server may obtain a search result (for example, a target neural network in embodiments of this application) by using a specific neural network search algorithm according to the performance requirement uploaded by the user, and deliver the search result to the user equipment.

FIG. 3 shows a neural network search system 100. The system may obtain training data 102 for training a neural network, verification data 104 for assessing performance of the neural network, and a performance requirement 103, and determine a search result 160 (for example, a target neural network in embodiments of this application) by using the training data 102, the verification data 104, and the performance requirement 103. The search result 160 is configured to meet the performance requirement 103, to be specific, receive input and generate output that meets the performance requirement 103. The search result 160 may be architecture information of the neural network. The architecture information may define a quantity of layers of the neural network, an operation performed at each layer, and a connection between layers in the neural network, to be specific, layers that receive input from another layer in the neural network.

The system 100 may receive the training data 102, the verification data 104, and the performance requirement 103 in any of various manners. For example, the system 100 may receive training data and the performance requirement 103 from a remote user of the system over a data communication network through, for example, an application programming interface (application programming interface, API) used for the system 100; and randomly divide uploaded data into the training data 102 and the verification data 104. In another example, the system 100 may receive input from a user, where the input specifies data that is maintained by the system 100 and that should be used to train a neural network; and then divide the specified data into the training data 102 and the verification data 104.

Usually, the system 100 may determine the search result 160 by searching space of a candidate architecture to recognize one or more architectures with optimal performance. For example, as shown in FIG. 3, the system 100 may search space of a candidate architecture, construct a plurality of candidate neural network architectures by using a candidate selection engine 130, and perform processing, for example, model training, on the candidate neural network architectures by using a training engine 140. A quality assessment engine 150 may assess a training result to determine the search result 160.

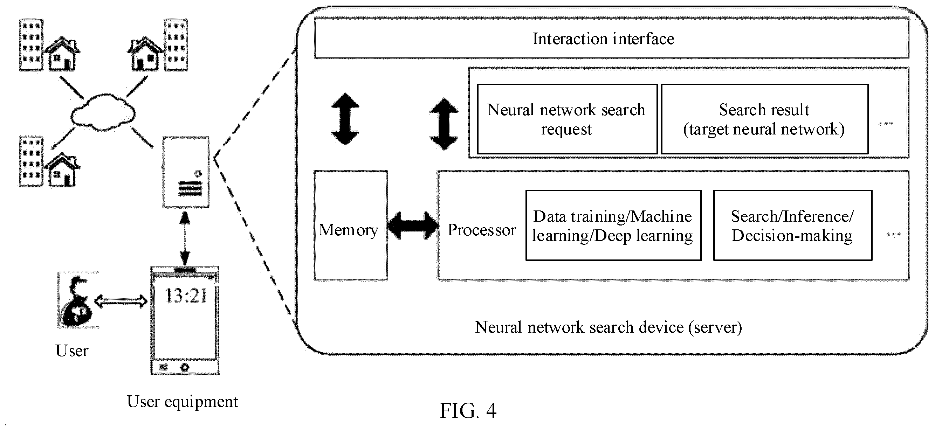

FIG. 4 shows a neural network search system. The neural network search system includes user equipment and a neural network search device. The user equipment includes an intelligent terminal, for example, a mobile phone, a personal computer, or an information processing center. The user equipment is an initiator of neural network search. A user usually initiates a neural network search request by using the user equipment.

The neural network search device may be a device or a server with a neural network search function, for example, a cloud server, a network server, an application server, or a management server. The neural network search device receives neural network search from the intelligent terminal through an interaction interface, and then performs neural network search in a manner of machine learning, deep learning, search, inference, decision-making, or the like by using a memory that stores data and a processor, and feeds back a search result (for example, a target neural network in embodiments of this application) to the user equipment. The memory in the neural network search device may be a collective term, and includes a local storage and a database for storing historical data. The database may be deployed on a data processing device or another network server.

In the neural network search system shown in FIG. 4, the user equipment may receive an instruction from a user. For example, the user equipment may receive a model performance requirement, input by the user, for neural network search, and then initiate a request to the neural network search device.

In FIG. 4, the neural network search device may perform a data processing method in embodiments of this application.

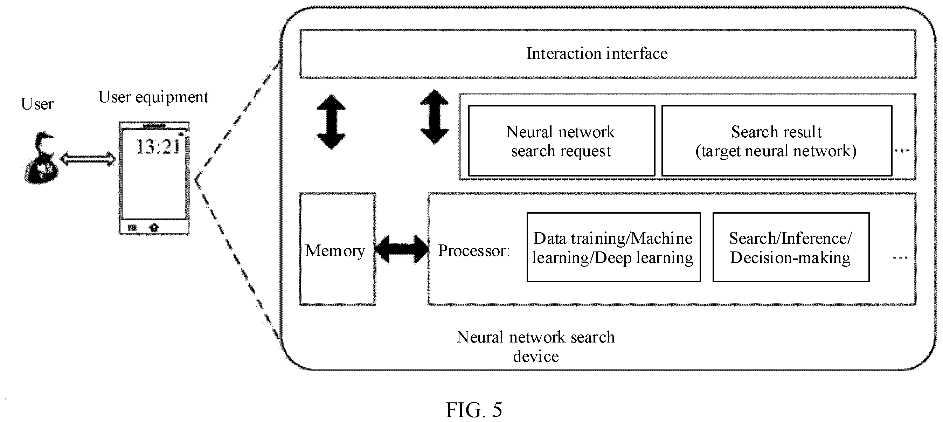

FIG. 5 shows another neural network search system. In FIG. 5, user equipment directly serves as a neural network search device. The user equipment can directly receive a model performance requirement, input by a user, for neural network search, and hardware of the user equipment directly performs neural network search. A specific process is similar to that in FIG. 4. Refer to the foregoing descriptions. Details are not described herein again.

In FIG. 5, the user equipment may perform the data processing method in embodiments of this application.

Scenario 2: Natural language processing

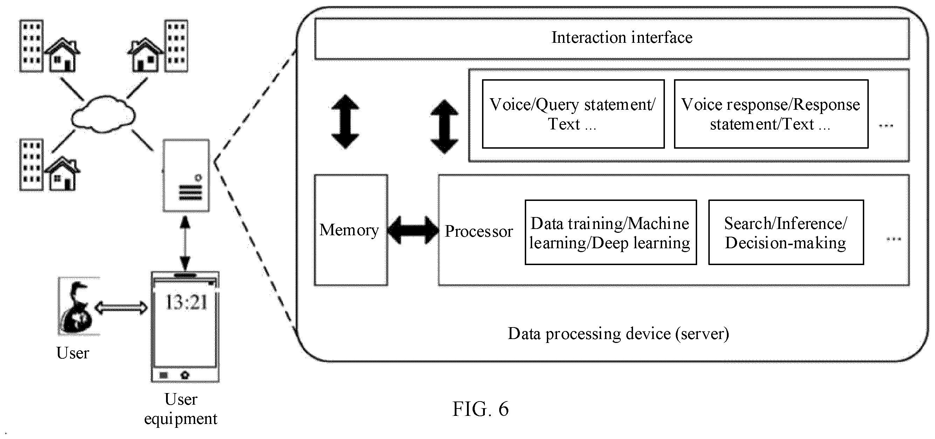

FIG. 6 shows a natural language processing system. The natural language processing system includes user equipment and a data processing device. The user equipment includes an intelligent terminal, for example, a mobile phone, a personal computer, or an information processing center. The user equipment is an initiator of natural language data processing, and serves as an initiator of a language-based question answering or query request or the like. A user usually initiates a request by using the user equipment.

The data processing device may be a device or a server with a data processing function, for example, a cloud server, a network server, an application server, or a management server. The data processing device receives a query statement, a voice or text question, or the like (for example, target data in embodiments of this application) from the intelligent terminal through an interaction interface, and then performs language data processing in a manner of machine learning, deep learning, search, inference, decision-making, or the like by using a memory that stores data and a processor for data processing (for example, performs data processing by using a target neural network in embodiments of this application), and feeds back a processing result (for example, a data processing result in embodiments of this application) to the user equipment. The memory in the data processing device may be a collective term, and includes a local storage and a database for storing historical data. The database may be deployed on the data processing device or another network server.

In the natural language processing system shown in FIG. 6, the user equipment may receive an instruction from a user. For example, the user equipment may receive a segment of text entered by the user, and then initiate a request to the data processing device, so that the data processing device performs natural language processing application (for example, text classification, text inference, named entity recognition, or translation) on the segment of text obtained by the user equipment, to obtain a processing result (for example, a classification result, an inference result, a named entity recognition result, or a translation result) for the natural language processing application corresponding to the segment of text. For example, the user equipment may receive a segment of Chinese text entered by the user, and then initiate a request to the data processing device, so that the data processing device performs entity classification on the segment of Chinese text to obtain an entity classification result for the segment of Chinese text. For example, the user equipment may receive a segment of Chinese text entered by the user, and then initiate a request to the data processing device, so that the data processing device translates the segment of Chinese text into English, to obtain an English translation of the segment of Chinese text.

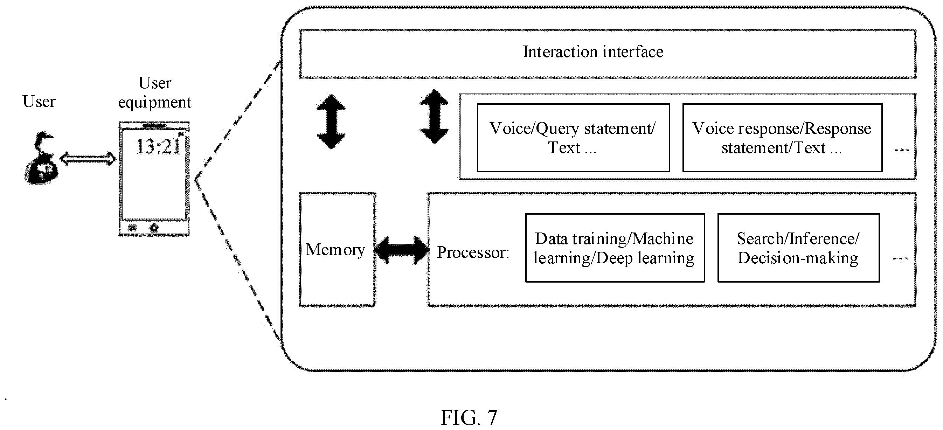

FIG. 7 shows another natural language processing system. In FIG. 7, user equipment directly serves as a data processing device. The user equipment can directly receive input (for example, target data in embodiments of this application) from a user, and hardware of the user equipment directly performs processing. A specific process is similar to that in FIG. 6. Refer to the foregoing descriptions. Details are not described herein again.

In the natural language processing system shown in FIG. 7, the user equipment may receive an instruction from a user. For example, the user equipment may receive a segment of text entered by the user, and then the user equipment performs natural language processing application (for example, text classification, text inference, named entity recognition, or translation) on the segment of text to obtain a processing result (for example, a classification result, an inference result, a named entity recognition result, or a translation result) for the natural language processing application corresponding to the segment of text. For example, the user equipment may receive a segment of Chinese text entered by the user, and performs entity classification on the segment of Chinese text to obtain an entity classification result for the segment of Chinese text. For example, the user equipment may receive a segment of Chinese text entered by the user, and translates the segment of Chinese text into English, to obtain an English translation of the segment of Chinese text.

In this embodiment of this application, the user equipment may store a target neural network, and performs an inference task based on the target neural network each time after an operating system (operating system, OS) or an application (application, APP) invokes the model.

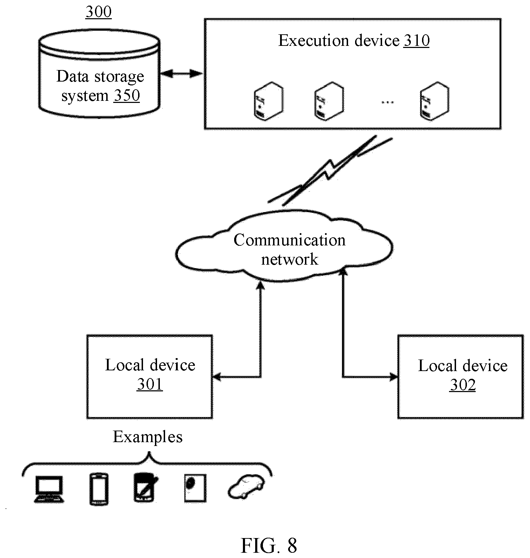

FIG. 8 is a diagram of a device 300 related to natural language processing according to an embodiment of this application.

The user equipment in FIG. 6 and FIG. 7 may be specifically a local device 301 or a local device 302 in FIG. 8. The data processing device in FIG. 6 may be specifically an execution device 310 in FIG. 8. A data storage system 350 may store target data of the execution device 310. The data storage system 350 may be integrated into the execution device 310, or may be deployed on a cloud or another network server.

The processor in FIG. 6 and FIG. 7 may perform data training, machine learning, or deep learning by using a neural network model or another model, and perform natural language processing application (for example, text classification, sequence tagging, reading comprehension, text generation, text interference, or translation) on a text sequence by using a model (for example, a target neural network in embodiments of this application) obtained through training, to obtain a corresponding processing result.

Scenario 3: Image processing and audio processing

A text processing architecture in the scenario 3 is similar to that in the scenario 2, but input data and task processing types of models are different. For example, input data for image processing may be image data, and a corresponding task may be image classification, object recognition, image segmentation, image super-resolution, or the like. For example, input data for audio processing may be audio data, and a corresponding task may be audio-to-text conversion, audio denoising, or the like.

Embodiments of this application relate to massive application of a neural network. Therefore, for ease of understanding, the following first describes related terms and related concepts such as a neural network in embodiments of this application.

(1) Neural network

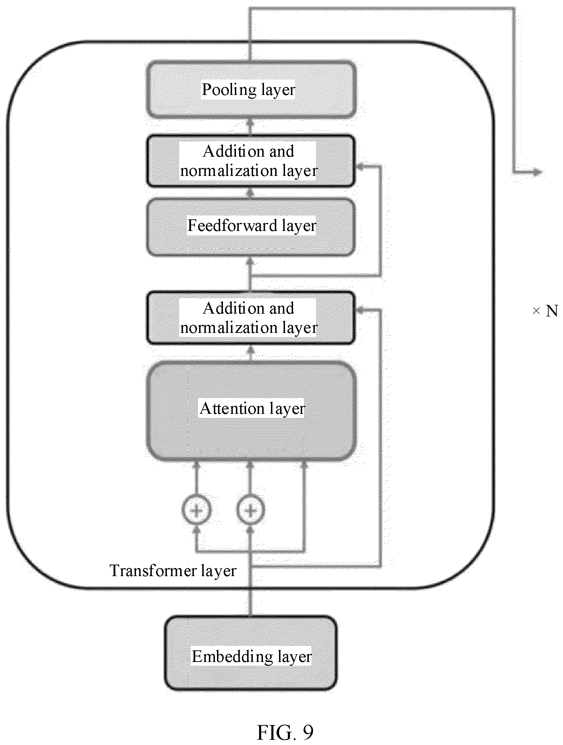

FIG. 9 is a diagram of an architecture of a transformer layer. As shown in FIG. 9, a neural network includes an embedding layer and at least one transformer layer. The at least one transformer layer may be N transformer layers (N is an integer greater than 0). Each transformer layer includes an attention layer, an addition and normalization (add & norm) layer, a feedforward (feedforward) layer, and an addition and normalization layer that are sequentially adjacent to each other. At the embedding layer, current input is embedded to obtain a plurality of feature vectors. At the attention layer, P input vectors are obtained from an upper layer of a first transformer layer. With any first input vector of the P input vectors as a center, an intermediate vector corresponding to the first input vector is obtained based on a correlation between each input vector within a preset attention window range and the first input vector. In this way, P intermediate vectors corresponding to the P input vectors are determined. At the pooling layer, the P intermediate vectors are combined into Q output vectors. A plurality of output vectors obtained at a last transformer layer of the transformer layer are a feature representation of the current input.

The foregoing steps are described below in detail with reference to specific examples.

First, at the embedding layer, the current input is embedded to obtain the plurality of feature vectors.

The embedding layer may be referred to as an input embedding (input embedding) layer. The current input may be text input, for example, a segment of text or a sentence. The text may be Chinese text, English text, or text in another language. After the current input is obtained, all words in the current input may be embedded at the embedding layer to obtain feature vectors of all the words. In some embodiments, as shown in FIG. 1, the embedding layer includes an input embedding layer and a positional encoding (positional encoding) layer. At the input embedding layer, word embedding may be performed on all the words in the current input to obtain word embedding vectors of all the words. At the positional encoding layer, positions of all the words in the current input may be obtained, to generate position vectors for the positions of all the words. In some examples, the positions of all the words may be absolute positions of all the words in the current input. For example, the current input is "what date should the Huabei debt be repaid", where a position of "what" may be represented as a first position, a position of "date" may be represented as a second position, and so on. In some examples, the positions of all the words may be positions of all the words relative to each other. For example, the current input is still "what date should the Huabei debt be repaid", where a position of "what" may be represented as being before "date", a position of "date" may be represented as being after "what" and before "should", and so on. When the word embedding vectors and the position vectors of all the words in the current input are obtained, the position vectors of all the words and corresponding word embedding vectors may be combined to obtain the feature vectors of all the words, namely, the plurality of feature vectors corresponding to the current input. The plurality of feature vectors may be represented as an embedding matrix with preset dimensionality. A quantity of feature vectors of the plurality of feature vectors may be set to M, and the preset dimensionality may be set to H dimensions. In this case, the plurality of feature vectors may be represented as an M×H embedding matrix.

Then the P input vectors are obtained from the upper layer of the first transformer layer. With any first input vector of the P input vectors as a center, an intermediate vector corresponding to the first input vector is obtained based on the correlation between each input vector within the preset attention window range and the first input vector. In this way, the P intermediate vectors corresponding to the P input vectors are determined. The attention layer may also be referred to as a multi-head attention (multi-head attention) layer. In an example, the attention layer may be a fixed window multi-head attention (fixed window multi-head attention) layer.

In some embodiments, the first transformer layer may be a lower layer of the embedding layer, and the P input vectors are the plurality of feature vectors obtained from the embedding layer. In some embodiments, the at least one transformer layer in the neural network provided in this embodiment of this specification further includes a second transformer layer. The second transformer layer is an upper layer of a first self-attention. In this case, the P input vectors are P output vectors that are output by the second transformer layer. At the last transformer layer in the neural network, the plurality of output vectors obtained in the foregoing steps may be the feature representation of the current input. The feature representation is a feature representation, suitable for computer processing, of the current input, and may be used for tasks such as text similarity, text classification, reading comprehension, and machine translation.

(3) Attention mechanism (attention mechanism)

The attention mechanism simulates an internal process of observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially in machine translation. A self-attention mechanism (self-attention mechanism) is obtained by improving the attention mechanism. The self-attention mechanism is less dependent on external information and is better at capturing an internal correlation of data or features. An essential idea of the attention mechanism may be rewritten as the following formula:

Lx=∥Source∥ represents a length of a source. The formula means that constituent elements in the source are assumed to include a series of data pairs. In this case, an element query in a target (target) is provided, similarity or a correlation between the query and each key is calculated to obtain a weight coefficient of a value corresponding to each key, and then weighted summation is performed on values to obtain a final attention value. Therefore, the attention mechanism is essentially to perform weighted summation on values of the elements in the source, and the query and the key are used to calculate a weight coefficient of a corresponding value. Conceptually, attention may be understood as selecting a small amount of important information from a large amount of information, focusing on the important information, and ignoring most of unimportant information. A process of focusing occurs during calculation of the weight coefficient. A larger weight indicates that a value corresponding to the weight is more focused. To be specific, the weight indicates importance of information, and the value is the information corresponding to the weight. The self-attention mechanism may be understood as intra attention (intra attention). The attention mechanism occurs between the element query in the target and all the elements in the source. The self-attention mechanism is an attention mechanism that occurs between elements in the source or between elements in the target, and may also be understood as an attention calculation mechanism in a special case of Target=Source. A specific calculation process of the self-attention mechanism is the same except that a calculation object changes.

(4) Natural language processing (natural language processing, NLP)

A natural language (natural language) is a human language, and natural language processing (NLP) is processing on the human language. The natural language processing is a process of performing systematic analysis, understanding, and information extraction on text data in an intelligent and efficient manner. By using the NLP and components thereof, massive chunks of text data may be managed, or a large quantity of automated tasks may be performed, and various problems, such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation, may be resolved.

For example, natural language processing tasks may be classified into the following types.

Sequence tagging: A model needs to provide a classification category for each word in a sentence based on context. For example, the sequence tagging is Chinese word segmentation, part-of-speech tagging, named entity recognition, or semantic role labeling.

Classification task: A classification value is output for an entire sentence. For example, the classification task is text classification.

Sentence relation inference: Two sentences are provided, and whether the two sentences have a nominal relation is determined. For example, the sentence relation inference is entailment, QA, semantic paraphrasing, or natural language inference.

Generative task: One segment of text is output, and another segment of text is generated. For example, the generative task is machine translation, text summarization, poem writing and sentence making, or picture description.

The following provides some examples of natural language processing.

Word segmentation (word segmentation or word breaker, WB): Continuous natural language text is segmented into lexical sequences with semantic plausibility and integrity, to eliminate a cross ambiguity.

Named entity recognition (named entity recognition, NER): Entities (such as people, places, organizations, time, and works) with specific meanings in natural language text are recognized.

Part-of-speech tagging (part-of-speech tagging): A part of speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structural ambiguity.

Word vector and semantic similarity (word embedding & semantic similarity): Words are represented as vectors, and a semantic similarity between the words is calculated based on the vectors, to resolve a problem of linguistic similarity between the words.

Text semantic similarity (text semantic similarity): Based on massive data in an entire network and a deep neural network technology, a capability of calculating a semantic similarity between text is implemented, to resolve a problem of text semantic similarity.

(5) Loss function

During training of a deep neural network, because output of the deep neural network is expected to be close to an actually expected predicted value as much as possible, a current predicted value of the network may be compared with an actually expected target value, and then a weight vector of each layer of the neural network is updated based on a difference between the two values (certainly, there is usually an initialization process before a first update, to be specific, a parameter is preconfigured for each layer of the deep neural network). For example, if the predicted value of the network is large, the weight vector is adjusted to reduce the predicted value, until the deep neural network can obtain, through prediction, the actually expected target value or a value quite close to the actually expected target value. Therefore, "how to obtain, through comparison, a difference between a predicted value and a target value" needs to be predefined. This is a loss function (loss function) or an objective function (objective function). The loss function and the objective function are important equations for measuring a difference between a predicted value and a target value. The loss function is used as an example. A larger output value (loss) of the loss function indicates a greater difference. Therefore, the training of the deep neural network is a process of minimizing the loss.

(6) Back propagation algorithm

During training of a convolutional neural network, an error back propagation (back propagation, BP) algorithm may be used to correct a value of a parameter in an initial super-resolution model, so that reconstruction error loss of the super-resolution model becomes increasingly small. Specifically, an input signal is transferred forward until error loss occurs at output, and the parameter in the initial super-resolution model is updated based on back propagation error loss information, to make the error loss converge. The back propagation algorithm is an error-loss-centered back propagation motion intended to obtain an optimal parameter, for example, a weight matrix, of the super-resolution model.

The following describes a more detailed architecture of an entity for performing the data processing method in embodiments of this application.

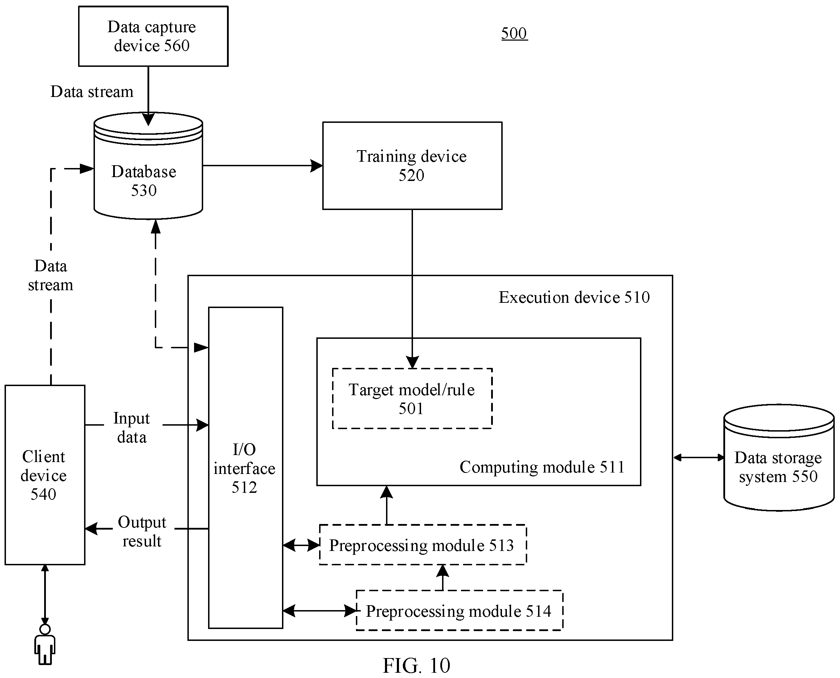

A system architecture provided in embodiments of this application is described below in detail with reference to FIG. 10. FIG. 10 is a diagram of a system architecture according to an embodiment of this application. As shown in FIG. 10, the system architecture 500 includes an execution device 510, a training device 520, a database 530, a client device 540, a data storage system 550, and a data capture system 560.

The execution device 510 includes a computing module 511, an I/O interface 512, a preprocessing module 513, and a preprocessing module 514. The computing module 511 may include a target model/rule 501. The preprocessing module 513 and the preprocessing module 514 are optional.

The data capture device 560 is configured to capture a training sample. The training sample may be image data, text data, audio data, or the like. In this embodiment of this application, the training sample is data used for training a plurality of candidate neural networks. After capturing the training sample, the data capture device 560 stores the training sample in the database 530.

It should be understood that search space may be further maintained in the database 530.

The training device 520 may construct a plurality of candidate neural networks based on the search space maintained in the database 530, and train the plurality of candidate neural networks based on the training sample, to obtain the target model/rule 501 through searching. In this embodiment of this application, the target model/rule 501 may be a target neural network.

It should be noted that, in practical application, the training sample maintained in the database 530 is not necessarily captured by the data capture device 560, and may alternatively be received from another device. In addition, it should be noted that the training device 520 does not necessarily train the target model/rule 501 completely based on the training sample maintained in the database 530, and may alternatively perform model training by obtaining a training sample from a cloud or another place. The foregoing descriptions should not be construed as a limitation on this embodiment of this application.

The target model/rule 501 obtained through training by the training device 520 may be used in different systems or devices, for example, used in the execution device 510 shown in FIG. 10. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server, a cloud, or the like.

Specifically, the training device 520 may transfer the target neural network to the execution device 510.

In FIG. 10, the execution device 510 is equipped with the input/output (input/output, I/O) interface 512 to exchange data with an external device. A user may input data (for example, target data in embodiments of this application) to the I/O interface 512 by using the client device 540.

The preprocessing module 513 and the preprocessing module 514 are configured to perform preprocessing based on input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may directly process the input data.

When the execution device 510 preprocesses the input data, or when the computing module 511 of the execution device 510 performs a related processing process such as calculation, the execution device 510 may invoke data, code, or the like in the data storage system 550 for corresponding processing, or may store data, instructions, or the like obtained through corresponding processing in the data storage system 550.

Finally, the I/O interface 512 presents a processing result (for example, a data processing result in embodiments of this application) to the client device 540, to provide the processing result for the user.

In the case shown in FIG. 10, the user may manually provide the input data, and the "manually providing the input data" may be implemented by performing an operation on an interface provided by the I/O interface 512. In another case, the client device 540 may automatically send the input data to the I/O interface 512. If the client device 540 needs to automatically send the input data, authorization needs to be obtained from the user. In this case, the user may set a corresponding permission on the client device 540. The user may view, on the client device 540, a result output by the execution device 510. The result may be specifically presented in a manner of display, sound, an action, or the like. The client device 540 may alternatively serve as a data capture end to capture the input data that is input to the I/O interface 512 and the output result that is output by the I/O interface 512 in the figure, and store the input data and the output result in the database 530 as new sample data. Certainly, the client device 540 may alternatively not perform capturing, and the I/O interface 512 directly stores, in the database 530 as new sample data, the input data that is input to the I/O interface 512 and the output result that is output by the I/O interface 512 in the figure.

It should be noted that FIG. 10 is merely a diagram of a system architecture according to an embodiment of this application. A positional relationship between devices, components, modules, and the like in the figure does not constitute any limitation. For example, in FIG. 10, the data storage system 550 is an external memory relative to the execution device 510. In another case, the data storage system 550 may alternatively be deployed in the execution device 510. It should be understood that the execution device 510 may be deployed in the client device 540.

Details from a perspective of model inference are as follows:
In this embodiment of this application, the computing module 511 of the execution device 520 may obtain the code stored in the data storage system 550, to implement the data processing method in embodiments of this application.

In this embodiment of this application, the computing module 511 of the execution device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, a hardware system with no instruction execution function, for example, an ASIC or an FPGA, or a combination of the hardware system with no instruction execution function and the hardware system with an instruction execution function.

Specifically, the computing module 511 of the execution device 520 may be a hardware system with an instruction execution function, the data processing method provided in embodiments of this application may be software code stored in a memory, and the computing module 511 of the execution device 520 may obtain the software code from the memory and execute the obtained software code to implement the data processing method provided in embodiments of this application.

It should be understood that the computing module 511 of the execution device 520 may be a combination of a hardware system with no instruction execution function and a hardware system with an instruction execution function. Some steps of the data processing method provided in embodiments of this application may alternatively be implemented by the hardware system with no instruction execution function in the computing module 511 of the execution device 520. This is not limited herein.

Details from a perspective of model training are as follows:

In this embodiment of this application, the training device 520 may obtain code stored in a memory (which is not shown in FIG. 10, and may be integrated into the training device 520 or deployed separately from the training device 520), to implement the data processing method in embodiments of this application.

In this embodiment of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, a hardware system with no instruction execution function, for example, an ASIC or an FPGA, or a combination of the hardware system with no instruction execution function and the hardware system with an instruction execution function.

Specifically, the training device 520 may be a hardware system with an instruction execution function, the data processing method provided in embodiments of this application may be software code stored in a memory, and the training device 520 may obtain the software code from the memory and execute the obtained software code to implement the data processing method provided in embodiments of this application.

It should be understood that the training device 520 may be a combination of a hardware system with no instruction execution function and a hardware system with an instruction execution function. Some steps of the data processing method provided in embodiments of this application may alternatively be implemented by the hardware system with no instruction execution function in the training device 520. This is not limited herein.

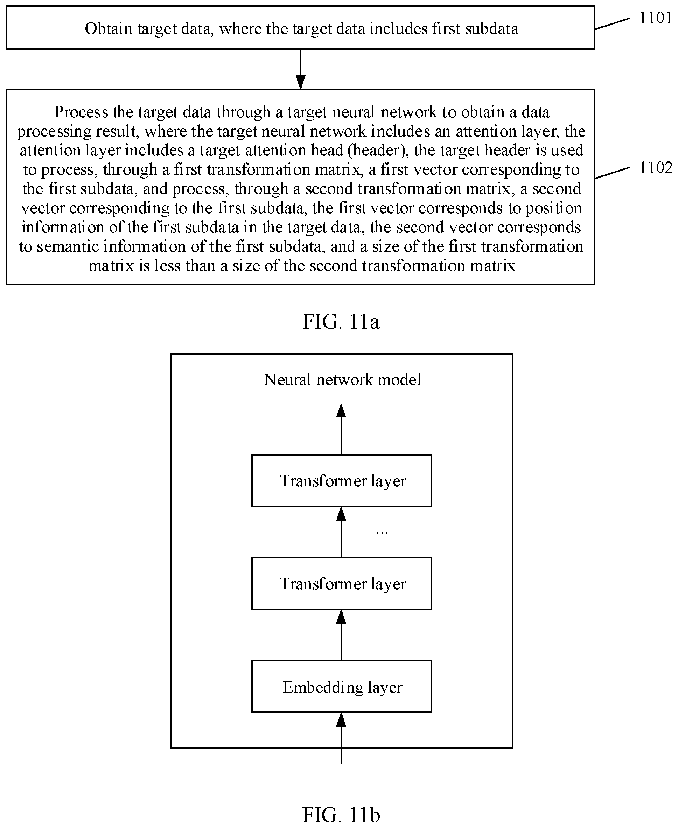

FIG. 11a is a diagram of an embodiment of a data processing method according to an embodiment of this application. The data processing method provided in this embodiment of this application may be used in an execution device or a training device. The execution device or the training device may be a terminal device, for example, a mobile phone, a tablet computer, a notebook computer, or an intelligent wearable device. Alternatively, the execution device or the training device may be a cloud-side server. As shown in FIG. 11a, the data processing method provided in this embodiment of this application may include the following steps.

1101: Obtain target data, where the target data includes first subdata.

1102: Process the target data through a target neural network to obtain a data processing result, where the target neural network includes an attention layer, the attention layer includes a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix.

In a possible implementation, step 1101 may be performed by the execution device during model inference.

In a possible implementation, step 1101 may be performed by the training device in a feedforward process during model training.

In a possible implementation, the execution device or the training device may obtain the target data, and process the target data through the target neural network. That "the target neural network processes the target data" may be understood as using the target data (or data obtained by processing the target data, for example, an embedding vector obtained through embedding) as input for the target neural network.

The following first describes the target neural network.

In a possible implementation, the target neural network may be a transformer model (or referred to as a transformer-layer-based neural network model).

FIG. 11b is a diagram of a structure of a neural network model according to an embodiment of this application. As shown in FIG. 11b, the transformer-layer-based neural network model may include an embedding layer and a plurality of transformer layers that are sequentially connected. It is learned by a person skilled in the art that the transformer model may be configured to perform a natural language processing NLP task, an image processing task, and an audio processing task. It should be understood that the structure in FIG. 11b is merely an example, and a quantity of transformer layers may be set according to a requirement. For example, only one transformer layer may be set, or more transformer layers may be set. The neural network model determines, based on N output vectors obtained at the transformer layers, feature vectors corresponding to a current node.

The following describes a specific operation process at each layer.

At the embedding layer, current input is embedded to obtain a plurality of feature vectors. A core characteristic of the transformer model lies in a unique attention mechanism used by the transformer model. During processing of a natural language, for example, a sentence, the transformer model assigns different attention coefficients to word vectors in the sentence by using the attention mechanism, so that impact of context on words in the sentence is considered more comprehensively. At the embedding layer, N embedding vectors $X_l$ are obtained based on a node feature and positional encoding of each node in a current sequence. An attention layer is connected to the embedding layer. The N embedding vectors are obtained from the embedding layer as input vectors. Based on a correlation between input vectors of the N input vectors, the input vectors are synthesized to obtain N output vectors. The N output vectors are output to a following transformer layer. At the transformer layer, output of an upper layer is obtained as an input vector, and an operation similar to that at an upper transformer layer is performed.

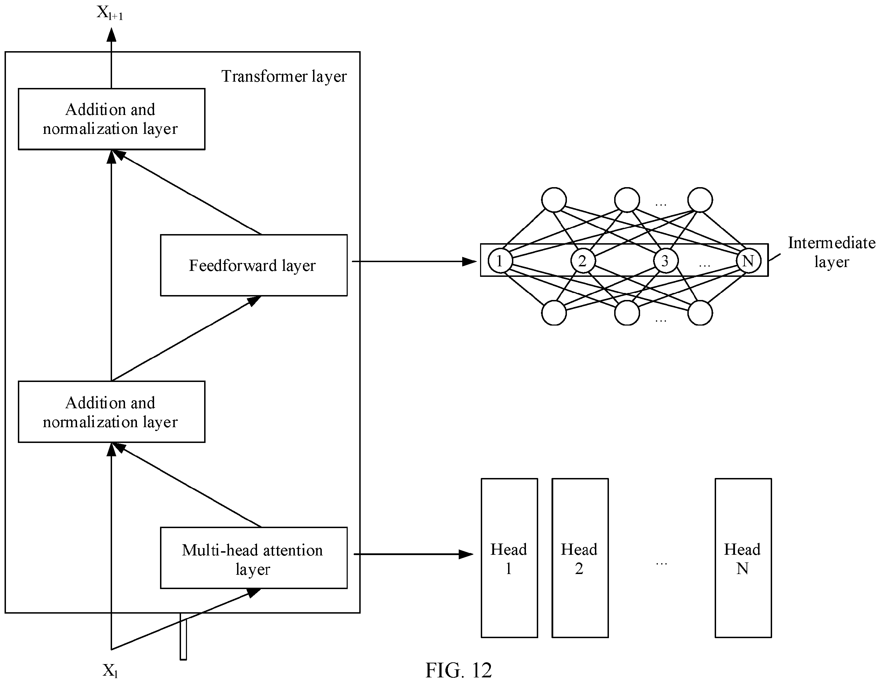

FIG. 12 is a diagram of a structure of a transformer layer. For transformer layers in neural networks in embodiments of this application, refer to the structure shown in FIG. 12. As shown in FIG. 12, the transformer layer includes a multi-head attention layer, an addition and normalization (add & norm) layer, a feedforward (feedforward) layer, and an addition and normalization layer that are sequentially adjacent to each other.

The multi-head attention layer obtains N input vectors $X_l$ from an upper layer of the multi-head attention layer, where the N input vectors $X_l$ may also be represented as a matrix X; and transforms the vectors based on a correlation between the vectors by using a self-attention mechanism to obtain N output vectors, where the N output vectors may also be represented as a matrix Y It can be understood that, when the multi-head attention layer is a layer directly connected to the embedding layer, for example, a transformer layer directly connected to the embedding layer in FIG. 11b, the input vector obtained by the multi-head attention layer is an embedding vector output by the embedding layer; or when the multi-head attention layer is a multi-head attention layer included in a following transformer layer, for example, a multi-head attention layer included in a transformer layer directly connected to an upper transformer layer in FIG. 11b, the input vector obtained by the multi-head attention layer is an output vector of the upper transformer layer. At the multi-head attention layer, an MHA layer based on multi-head attention (multi-head attention, MHA) includes a plurality of attention heads (head) (for example, a head 1, a head 2, ..., and a head N shown in FIG. 12).

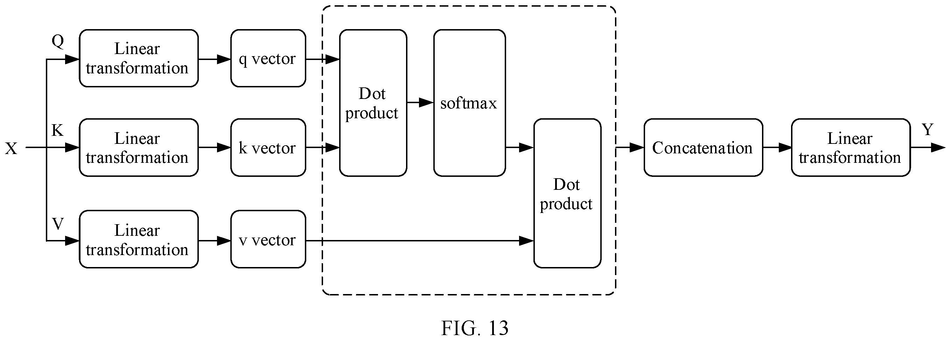

FIG. 13 is a diagram of an operation of an attention head (head). The diagram shows how the attention head (head) transforms an input matrix X into an output matrix Y As shown in FIG. 13, each input vector $X_i$ of N input vectors <$X_1$, $X_2$, ..., $X_N$> is transformed by using a first transformation matrix Q, a second transformation matrix K, and a third transformation matrix V, to obtain a first intermediate vector (a q vector), a second intermediate vector (a k vector), and a third intermediate vector (a v vector) that correspond to each input vector. During operations, linear transformation may be performed, by using the first transformation matrix Q, the second transformation matrix K, and the third transformation matrix V, on the input matrix X that includes the N input vectors, to obtain a matrix Q, a matrix K, and a matrix V of the input matrix. Then the matrices each are decomposed to obtain the q vector, the k vector, and the v vector that correspond to each input vector. For any $i^{th}$ input vector $X_i$ of the N input vectors, a correlation between the $i^{th}$ input vector $X_i$ and each input vector $X_j$ is determined based on a dot product operation on a first intermediate vector (a q vector, $q_i$) corresponding to the $i^{th}$ input vector and a second intermediate vector (a k vector, $k_j$) corresponding to each input vector $X_j$. A dot product result of $q_i$ and $k_j$ may be directly determined as the correlation. However, more typically, the dot product result is first divided by a constant, and then a softmax operation is performed, and an operation result is used as the correlation between the input vectors $X_i$ and $X_j$:

$$\alpha_{i,j} = softmax\left(\frac{q_i \cdot k_j}{\sqrt{d_k}}\right)$$

Therefore, the correlation $\alpha_{i,j}$ between the $i^{th}$ input vector $X_i$ and each input vector $X_j$ may be used as a weight factor to perform weighted combination on a third intermediate vector (a v vector, $v_j$) corresponding to each input vector $X_j$, to obtain an $i^{th}$ combined vector $C_i$ corresponding to the $i^{th}$ input vector $X_i$:

$$C_i = \Sigma_{j=1}^{N}\alpha_{i,j}v_j$$

Therefore, a vector sequence <$C_1$, $C_2$, ..., $C_N$> or a matrix C of N combined vectors corresponding to the N input vectors may be obtained. N output vectors may be obtained based on the combined vector sequence. Specifically, in an embodiment, the vector sequence of the N combined vectors may be directly used as the N output vectors, that is, $Y_i=C_i$. In this case, the output matrix Y is the combined vector matrix C, and may also be expressed as follows:

$$Y = softmax\left(\frac{QK^T}{\sqrt{d_k}}\right)V$$

A processing process of an attention head (head) is described above. In an MHA architecture, an MHA layer maintains m sets of transformation matrices, and each set of transformation matrices includes the first transformation matrix Q, the second transformation matrix K, and the third transformation matrix V Therefore, the foregoing operations may be performed in parallel to obtain m combined vector sequences (namely, m matrices C). Each vector sequence includes N combined vectors obtained based on one set of transformation matrices. In this case, at the MHA layer, the obtained m combined vector sequences are concatenated to obtain a concatenated matrix, and then the concatenated matrix is transformed by using a fourth transformation matrix W to obtain a final output matrix Y Corresponding N output vectors <$Y_1$, $Y_2$, ..., $Y_N$> are obtained by decomposing the output matrix Y In the foregoing operation process, at the MHA layer, a transformation operation is performed based on a correlation between the N input vectors to obtain the N output vectors.

As shown in FIG. 12, the transformer layer includes the feedforward layer. The feedforward layer includes an input layer, an intermediate layer (intermediate layer), and an output layer. The intermediate layer includes a plurality of neurons.

As described above, the neural network model may include a plurality of transformer layers. In an embodiment, the plurality of transformer layers may be connected in a stacked manner by using a residual network, to form the neural network model.

When there are a plurality of transformer layers, in an embodiment, the neural network model may synthesize N output vectors obtained at each of the plurality of transformer layers, to obtain feature vectors corresponding to a current node. In another embodiment, the neural network model may alternatively extract only N output vectors obtained at a last transformer layer, and synthesize the N output vectors to obtain feature vectors of a current node.

It can be understood that the neural network model depends on a large quantity of parameters, for example, parameters in the foregoing transformation matrices (the matrix Q, the matrix K, the matrix V, and the like), during calculation for determining the feature vectors of the current node. These parameters are determined by training the neural network model. In different embodiments, the neural network model may be trained by using different tasks.

In a possible implementation, the target neural network is a transformer network with absolute positional encoding. The transformer network with absolute positional encoding may calculate the correlation $\alpha_{i,j}$ between the $i^{th}$ input vector $X_i$ and each input vector $X_j$ by using the following formula (1):

$$\begin{cases} q_i = (x_i + p_i)W_Q \\ k_j = (x_j + p_j)W_K \\ v_j = (x_j + p_j)W_V \qquad (1) \\ a_{i,j} = softmax(q_i k_j^T) \\ o_i = \sum_j a_{i,j} v_j \end{cases}$$

$x_i \in \mathbb{R}^d$ may represent a word vector (word embedding in English) in natural speech, or a patch vector (patch embedding in English) in the image field. It should be understood that, for an input text word or image patch sequence, a conventional positional encoding injection solution in a pre-trained model is to directly add positional encoding to an input word vector or an image patch vector to form a representation of a text word or an image patch in the sequence. For ease of description, the patch is also considered as a token of an image below. $p_i \in \mathbb{R}^d$ may represent absolute positional encoding (absolute position embedding).

T may represent transposition, and $W_Q \in \mathbb{R}^{d \times d_Q}$, $W_K \in \mathbb{R}^{d \times d_k}$, and $W_V \in \mathbb{R}^{d \times d_V}$ represent trainable mapping matrices (learnable projection matrices).

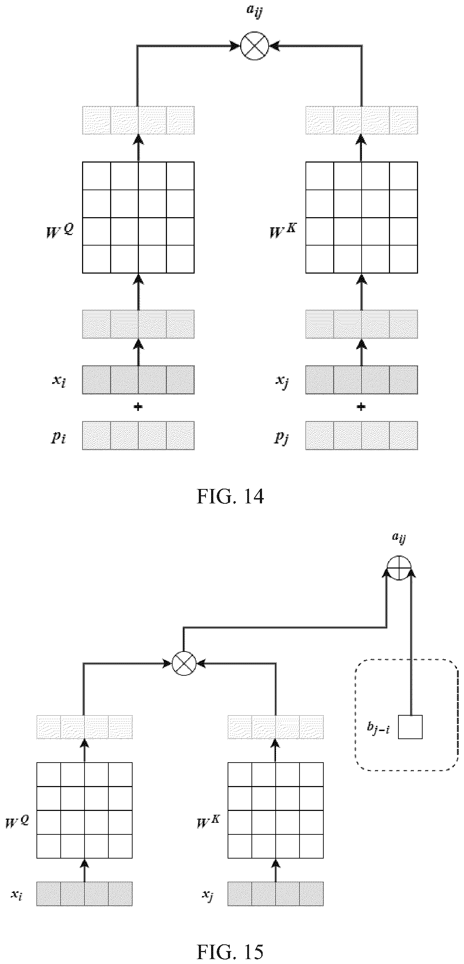

FIG. 14 shows a conventional process of calculating an attention score $a_{i,j}$. $q_i k_j^T$ in the attention score $a_{i,j}$ in the formula (1) is preliminarily expanded as follows:

$$q_i k_j^{\mathrm{T}} = (x_i + p_i) W_Q W_K^{\mathrm{T}} (x_j + p_j)^{\mathrm{T}} = (x_i W_Q + p_i W_Q)(W_K^{\mathrm{T}} x_j^{\mathrm{T}} + W_K^{\mathrm{T}} p_j^{\mathrm{T}}) \quad (2)$$

The formula (2) is further expanded to obtain a formula (3):

$$q_i k_j^{\mathrm{T}} = x_i W_Q W_K^{\mathrm{T}} x_j^{\mathrm{T}} + x_i W_Q W_K^{\mathrm{T}} p_j^{\mathrm{T}} + p_i W_Q W_K^{\mathrm{T}} x_j^{\mathrm{T}} + p_i W_Q W_K^{\mathrm{T}} p_j^{\mathrm{T}} \qquad (3)$$

In this way, four terms are obtained. $q_i k_j^{\mathrm{T}}$ may be considered as a combination of the following four terms: (1) a "word-to-word" term (indicating a correlation between words (token correlation)): for example, "token-to-token" or "patch-to-patch"; (2) a " word-to-position" term (indicating a correlation between a word and a position (token-position correlation)): for example, "token-to-position" or "patch-to-position"; (3) a "position-to-word" term (indicating a correlation between a position and a word (position-token correlation)): for example, "position-to-token" or "position-to-patch"; and (4) a " position-to-position" term (indicating a correlation between positions (positional correlation)): for example, "position-to-position" (an absolute position is used herein).

In a conventional implementation, the fourth term "position-to-position" is modified, so that the fourth term is simplified into a "relative position-to-relative position" bias (relative positional correlation bias) term. $q_i k_j^{\mathrm{T}}$ is simplified as follows:

$$q_i k_j^{\mathrm{T}} = x_i W_Q W_K^{\mathrm{T}} x_j^{\mathrm{T}} + b_{j-i} \qquad (4)$$

$b_{j-i} \in \mathbb{R}$ is a trainable scalar that indicates a relative positional correlation (relative positional correlation, RPC) from a position j to a position i in the sequence and that has directivity, to be specific, $b_{j-i} \neq b_{i-j}$. FIG. 15 shows a process of calculating an attention score $a_{i,j}$ that includes a relative positional correlation (RPC) $b_{j-i}$.

A main disadvantage of this method is as follows: Only a correlation between relative positions is used in a position-to-position term during calculation of the attention score $a_{i,j}$, and a function of a correlation between absolute positions during calculation of the attention score $a_{i,j}$ is ignored.

In a conventional implementation, the fourth term is divided into two terms: an "absolute position-to-absolute position" term between absolute positions, and a "relative position-to-relative position" bias term between relative positions.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + b_{j-i} \qquad (5)$$

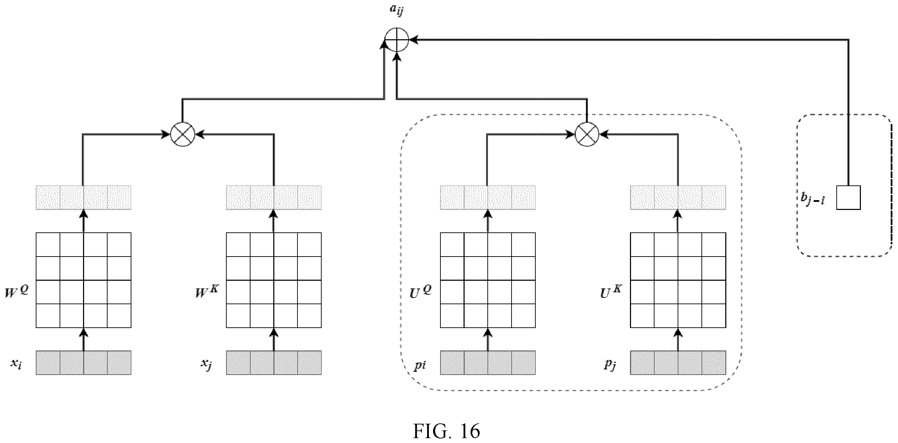

$p_i U_Q U_K^{\mathrm{T}} p_j^{\mathrm{T}}$ indicates a term of a correlation (absolute positional correlation, APC) between absolute positions $i$ and $j$. $b_{j-i}$ is a trainable scalar that indicates a relative positional correlation (Relative Positional Correlation) from a position j to a position i in the sequence. FIG. 16 shows a process of calculating an attention score $a_{i,j}$. A large dashed-line box indicates a process of calculating an absolute positional correlation (APC) term. A small dashed-line box indicates a relative positional correlation $b_{j-i}$.

Main disadvantages of this method are as follows: (1) Only one scalar bias is added to calculation of the relative positional correlation (RPC) during calculation of $a_{i,j}$ in the attention score, and a capability of expressing the relative positional correlation (RPC) is limited. (2) Dimensionality of an absolute position vector is consistent with that of a token vector. During processing of an ultra-large-scale model, with an increase of the dimensionality of the token vector, the absolute position vector and a corresponding mapping matrix also occupy a large amount of storage space, and a large quantity of computing resources are also consumed during calculation of the correlation (APC) between absolute positions.

In this embodiment of this application, the target data may be obtained.

In a possible implementation, the target data may be text data. When the target data is input to the transformer model, a header at a transformer layer in the transformer model may calculate a correlation (for example, $\alpha_{i,j}$ in the formula (1)) between a plurality of pieces of subdata (for example, the first subdata and second subdata in this embodiment of this application) in the target data. The subdata may be a word unit or a phrase unit.

In a possible implementation, the target data may be image data, for example, a patch sequence. When the target data is input to the transformer model, a header at a transformer layer in the transformer model may calculate a correlation (for example, $\alpha_{i,j}$ in the formula (1)) between a plurality of pieces of subdata (for example, the first subdata and second subdata in this embodiment of this application) in the target data. The subdata may be image block data.

In a possible implementation, the target data may be audio data. When the target data is input to the transformer model, a header at a transformer layer in the transformer model may calculate a correlation (for example, $\alpha_{i,j}$ in the formula (1)) between a plurality of pieces of subdata (for example, the first subdata and second subdata in this embodiment of this application) in the target data. The subdata may be audio segment data.

A target header at the transformer layer is used below as an example for description. The target header may be any attention head at any transformer layer in the transformer model.

In a possible implementation, the target data may include a plurality of pieces of subdata (for example, including the first subdata and the second subdata). When calculating a correlation (for example, $\alpha_{i,j}$ in the formula (1)) between the first subdata and the second subdata, the target header needs to calculate a position vector corresponding to the first subdata, a semantic vector corresponding to the second subdata, and a positional correlation between position vectors.

In a possible implementation, a position vector is related to a position of subdata in the target data.

In a possible implementation, a semantic vector is related to semantics of subdata. For example, when the target data is text data, the semantic vector may be a word vector (word embedding); or when the target data is image data, the semantic vector may be a patch vector.

In a possible implementation, during calculation of a positional correlation between a plurality of pieces of subdata, corresponding position vectors may be separately set for different subdata. For example, if the plurality of pieces of subdata include the first subdata and the second subdata, a corresponding position vector (the first vector) may be set for the first subdata, and a corresponding position vector (a third vector) may be set for the second subdata.

In this possible implementation, a positional correlation between the first subdata and the second subdata may include a positional correlation between absolute position information of the first subdata and the second subdata in the target data.

The absolute position may include an absolute position of the first subdata in the target data. For example, the target data is as follows: Huawei is in Shenzhen. A position of the word unit "in" in the target data is 3, and a position of the word unit "Shenzhen" in the target data is 4. To be specific, the first vector may correspond to the absolute position of the first subdata in the target data, and the third vector may correspond to an absolute position of the second subdata in the target data. Similarly, the absolute position may include an absolute position of the second subdata in the target data.

In this possible implementation, a positional correlation between the first subdata and the second subdata may alternatively include a positional correlation between relative positions of the first subdata and the second subdata in the target data. When the positional correlation is the positional correlation between the relative positions, the first vector may represent a relative position of the first subdata in the target data relative to the second subdata, and the third vector may represent a relative position of the second subdata in the target data relative to the first subdata. For example, the target data is as follows: Huawei is in Shenzhen. A relative position of the word unit "in" in the target data relative to the word unit "Shenzhen" is a previous position, and a relative position of the word unit "Shenzhen" in the target data relative to the word unit "in" is a next position.

In a possible implementation, when calculating the correlation between the first subdata and the second subdata, the target header may further calculate a correlation between semantic information of the first subdata and semantic information of the second subdata, namely, a correlation between a semantic vector of the first subdata and the semantic vector of the second subdata.

In a possible implementation, the second vector may correspond to the semantic information of the first subdata, and a fourth vector may correspond to the semantic information of the second subdata.

During calculation of a specific correlation, for example, during calculation of a correlation between semantic information, the target header may perform an operation on the semantic vector (the second vector) of the first subdata and a corresponding transformation matrix (the second transformation matrix), where the operation may be a matrix multiplication operation; perform calculation on the semantic vector (the fourth vector) corresponding to the second subdata and a corresponding transformation matrix (the fourth transformation matrix), where the calculation may be a matrix multiplication operation; and then may perform an operation on a product result (third intermediate output) of the semantic vector (the second vector) corresponding to the first subdata and the corresponding transformation matrix (the second transformation matrix) and a product result (fourth intermediate output) of the semantic vector (the fourth vector) of the second subdata and the corresponding transformation matrix (the fourth transformation matrix), to obtain the correlation between the semantic information of the first subdata and the semantic information of the second subdata. For example, a second correlation between the third intermediate output and the fourth intermediate output may be obtained, where the second correlation indicates the correlation between the semantic information of the first subdata and the semantic information of the second subdata.

The correlation between semantic information may be $x_i W_Q W_K^{\mathrm{T}} x_j^{\mathrm{T}}$ in the formula (3).

Similarly, during calculation of a correlation between position information, the target header may perform an operation on the position vector (the first vector) of the first subdata and a corresponding transformation matrix (the first transformation matrix), where the operation may be a matrix multiplication operation; perform calculation on the position vector (the second vector) corresponding to the first subdata and a corresponding transformation matrix (the second transformation matrix), where the calculation may be a matrix multiplication operation; and then may perform an operation on a product result (third intermediate output) of the position vector (the first vector) corresponding to the first subdata and the corresponding transformation matrix (the first transformation matrix) and a product result (second intermediate output) of the position vector (the second vector) of the first subdata and the corresponding transformation matrix (the second transformation matrix), to obtain a correlation between position information of the first subdata and position information of the first subdata. For example, a first correlation between the first intermediate output and the second intermediate output may be obtained, where the first correlation indicates a correlation between the position information of the first subdata in the target data and position information of the second subdata in the target data.

In a conventional implementation, a size of a transformation matrix corresponding to a semantic vector of subdata is completely consistent with a size (or described as a dimension) of a transformation matrix corresponding to a position vector. The being completely consistent herein may be understood as that quantities of parameters included in the transformation matrices are consistent. For example, lengths or widths may be completely consistent.

However, with a continuous increase of an amount of the target data, a quantity of subdata continuously increases, a quantity of transformer layers and a quantity of attention heads included in each transformer layer continuously increase, and a quantity of transformation matrices also continuously increases. When a size of a transformation matrix is large, a quantity of to-be-trained parameters in the transformation matrix also continuously increases, and the transformation matrix also occupies a quite large quantity of storage resources. This greatly increases computing resource overheads of the transformer model during both inference and training.

In this embodiment of this application, a matrix size of a transformation matrix corresponding to a position vector is set to be less than a size of a matrix corresponding to a semantic vector. To be specific, the size of the first transformation matrix is less than the size of the second transformation matrix. Compared with the conventional technology in which a positional correlation between subdata is not calculated or a correlation between positions is indicated by a scalar, in this embodiment of this application, a correlation between positions is still obtained by performing an operation on a transformation matrix and a position vector, so that accuracy of a correlation between subdata can be increased, and a model convergence speed during training can be increased. In addition, during calculation of a correlation between positions, a size of a transformation matrix used for calculating a correlation between position information is reduced, to reduce computing resource overheads of the transformer model during inference or training.

It should be understood that, in this embodiment of this application, a specific process of calculating a correlation between positions needs to be mapped to an operator operation graph and corresponding hardware, for example, a neural network chip, for implementation. A quantity of operation parameters is reduced to reduce a quantity of computing units used in the hardware and computing power overheads.

In a possible implementation, for same subdata, a size of a transformation matrix used for calculating a correlation between position information is less than a size of a transformation matrix corresponding to calculation of a correlation between semantic information.

The first subdata is used as an example. A size of a transformation matrix (the first transformation matrix) used for calculating a correlation between position information is less than a size of a transformation matrix (the second transformation matrix) used for calculating a correlation between semantic information.

In a possible implementation, sizes of transformation matrices corresponding to position vectors of all subdata in a correlation between position information of a plurality of pieces of subdata are consistent. For example, the plurality of pieces of subdata may include the first subdata and the second subdata. In this case, during calculation of the correlation between the position information of the first subdata and the position information of the second subdata, a size of a transformation matrix corresponding to the position vector of the first subdata is consistent with a size of a transformation size corresponding to the position vector of the second subdata. Certainly, the size of the transformation matrix corresponding to the position vector of the first subdata is less than a size of a transformation matrix corresponding to the semantic vector of the first subdata, and the size of the transformation matrix corresponding to the position vector of the second subdata is less than a size of a transformation matrix corresponding to the semantic vector of the second subdata.

In a possible implementation, the size of the first transformation matrix is less than a half of the size of the second transformation matrix.

In a possible implementation, during calculation of a correlation between position information of subdata, only a correlation between absolute position information of the subdata may be calculated, or only a correlation between relative position information of the subdata may be calculated, or both a correlation between relative position information and a correlation between absolute position information may be calculated.

In a possible implementation, during calculation of a correlation between position information of subdata, if only a correlation between absolute position information is calculated, the foregoing manner of reducing a size of a transformation matrix may be used for calculating the correlation between the absolute position information.

In a possible implementation, during calculation of a correlation between position information of subdata, if only a correlation between relative position information is calculated, the foregoing manner of reducing a size of a transformation matrix may be used for calculating the correlation between the relative position information.

In a possible implementation, during calculation of a correlation between position information of subdata, if both a correlation between absolute position information and a correlation between relative position information are calculated, the foregoing manner of reducing a size of a transformation matrix may be used for at least one of the correlation between the absolute position information and the correlation between the relative position information.

In a possible implementation, during calculation of a correlation between position information of subdata, if both a correlation between absolute position information and a correlation between relative position information are calculated, the foregoing manner of reducing a size of a transformation matrix may be used for one of the correlation between the relative position information, and the correlation between the absolute position information is directly represented by a trainable scalar.

In a possible implementation, during calculation of a correlation between position information of subdata, if both a correlation between absolute position information and a correlation between relative position information are calculated, a manner of not reducing a size of a transformation matrix may be used for one of the correlation between the relative position information, to be specific, a size of a transformation matrix used for calculating a positional correlation is consistent with a size of a transformation matrix used for calculating a semantic correlation, the correlation between the absolute position information is directly represented by a trainable scalar.

In a possible implementation, during calculation of a correlation between position information of subdata, if only a correlation between absolute position information is calculated, the correlation between the absolute position information may be directly represented by a trainable scalar.

The first subdata and the second subdata are used as examples. In a possible implementation, the target header is further used to determine a target scalar from a pre-trained scalar set, where different scalars in the scalar set indicate correlations between absolute positions of different groups of subdata in the target data, and the target scalar indicates a third correlation between an absolute position of the first subdata in the target data and an absolute position of the second subdata in the target data.

A correlation between absolute positions is represented by a trainable scalar. This is equivalent to skipping calculating the correlation between the absolute positions through a transformation matrix. This can reduce computing resource overheads during calculation.

The following provides several embodiments by using the first subdata and the second subdata as examples.

Case 1:

During calculation of a correlation between position information of the first subdata and position information of the second subdata, a vector A (indicating an absolute position of the first subdata in the target data) corresponding to the first subdata is processed by using a transformation matrix A to obtain first intermediate output, a vector C (indicating an absolute position of the second subdata in the target data) corresponding to the second subdata is processed by using a transformation matrix C to obtain second intermediate output, and a first correlation between the first intermediate output and the second intermediate output is obtained, where the first correlation indicates a correlation between absolute position information of the first subdata in the target data and absolute position information of the second subdata in the target data.

During calculation of a correlation between semantic information of the first subdata and semantic information of the second subdata, a vector B (indicating the semantic information of the first subdata) corresponding to the first subdata is processed by using a transformation matrix B to obtain third intermediate output, a vector D (indicating the semantic information of the second subdata) corresponding to the second subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the second subdata.

A size of the transformation matrix A is less than a size of the transformation matrix B, and a size of the transformation matrix C is less than a size of the transformation matrix D.

Case 2:

During calculation of a correlation between position information of the first subdata and position information of the second subdata, a vector E (indicating a position of the first subdata in the target data relative to the second subdata) corresponding to the first subdata is processed by using a transformation matrix E to obtain first intermediate output, a vector F (indicating a position of the second subdata in the target data relative to the first subdata) corresponding to the second subdata is processed by using a transformation matrix F to obtain second intermediate output, and a first correlation between the first intermediate output and the second intermediate output is obtained, where the first correlation indicates a correlation between relative position information of the first subdata in the target data and relative position information of the second subdata in the target data.

During calculation of a correlation between semantic information of the first subdata and semantic information of the second subdata, a vector B (indicating the semantic information of the first subdata) corresponding to the first subdata is processed by using a transformation matrix B to obtain third intermediate output, a vector D (indicating the semantic information of the second subdata) corresponding to the second subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the second subdata.

A size of the transformation matrix E is less than a size of the transformation matrix B, and a size of the transformation matrix F is less than a size of the transformation matrix D.

Case 3:

During calculation of a correlation between position information of the first subdata and position information of the second subdata, a vector A (indicating an absolute position of the first subdata in the target data) corresponding to the first subdata is processed by using a transformation matrix A to obtain first intermediate output, a vector C (indicating an absolute position of the second subdata in the target data) corresponding to the second subdata is processed by using a transformation matrix C to obtain second intermediate output, and a first correlation between the first intermediate output and the second intermediate output is obtained, where the first correlation indicates a correlation between absolute position information of the first subdata in the target data and absolute position information of the second subdata in the target data.

During calculation of the correlation between the position information of the first subdata and the position information of the second subdata, a vector E (indicating a position of the first subdata in the target data relative to the second subdata) corresponding to the first subdata is further processed by using a transformation matrix E to obtain first intermediate output, a vector F (indicating a position of the second subdata in the target data relative to the first subdata) corresponding to the second subdata is processed by using a transformation matrix F to obtain second intermediate output, and a first correlation between the first intermediate output and the second intermediate output is obtained, where the first correlation indicates a correlation between relative position information of the first subdata in the target data and relative position information of the second subdata in the target data.

During calculation of a correlation between semantic information of the first subdata and semantic information of the second subdata, a vector B (indicating the semantic information of the first subdata) corresponding to the first subdata is processed by using a transformation matrix B to obtain third intermediate output, a vector D (indicating the semantic information of the second subdata) corresponding to the second subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the second subdata.

A size of the transformation matrix A is less than a size of the transformation matrix B, and a size of the transformation matrix C is less than a size of the transformation matrix D. A size of the transformation matrix E is less than the size of the transformation matrix B, and a size of the transformation matrix F is less than the size of the transformation matrix D.

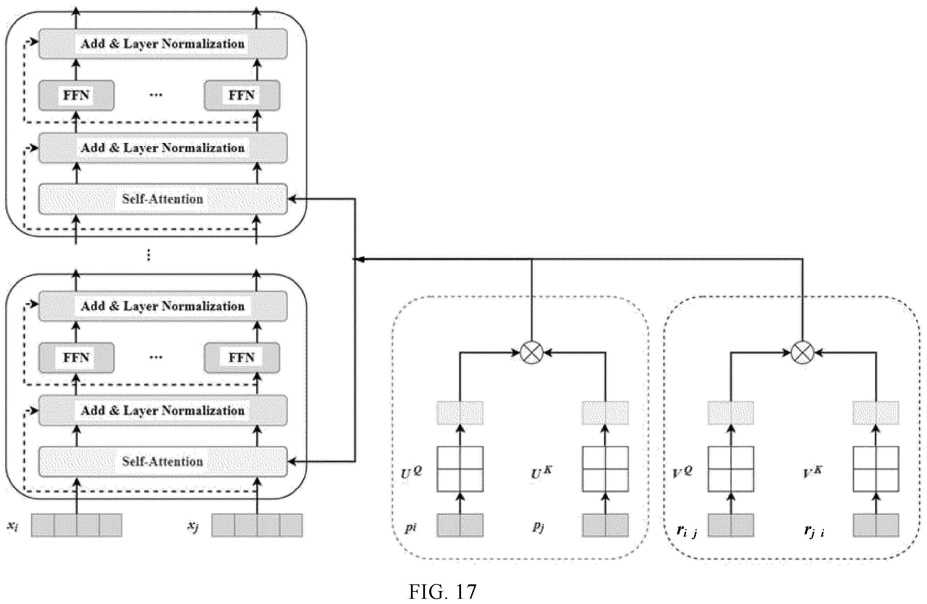

For example, as shown in FIG. 17, $U^Q$ may indicate the transformation matrix A, $U^K$ may indicate the transformation matrix C, $V^Q$ may indicate the transformation matrix E, $V^K$ may indicate the transformation matrix F, $P^i$ may indicate the vector A, $P^j$ may indicate the vector C, $r_{i-j}$ may indicate the vector E, and $r_{j-i}$ may indicate the vector F.

Case 4:

During calculation of a correlation between position information of the first subdata and position information of the second subdata, a vector A (indicating an absolute position of the first subdata in the target data) corresponding to the first subdata is processed by using a transformation matrix A to obtain first intermediate output, a vector C (indicating an absolute position of the second subdata in the target data) corresponding to the second subdata is processed by using a transformation matrix C to obtain second intermediate output, and a first correlation between the first intermediate output and the second intermediate output is obtained, where the first correlation indicates a correlation between absolute position information of the first subdata in the target data and absolute position information of the second subdata in the target data.

During calculation of the correlation between the position information of the first subdata and the position information of the second subdata, a correlation between relative position information of the first subdata in the target data and relative position information of the second subdata in the target data may be further represented by a trainable scalar.

During calculation of a correlation between semantic information of the first subdata and semantic information of the second subdata, a vector B (indicating the semantic information of the first subdata) corresponding to the first subdata is processed by using a transformation matrix B to obtain third intermediate output, a vector D (indicating the semantic information of the second subdata) corresponding to the second subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the second subdata.

A size of the transformation matrix A is less than a size of the transformation matrix B, and a size of the transformation matrix C is less than a size of the transformation matrix D.

A formula (6) provides a solution for calculating a correlation between positions, where

$$x_i, x_j \in \mathbb{R}^d, \ W_Q \in \mathbb{R}^{d \times d_Q}, \ W_K \in \mathbb{R}^{d \times d_k}, \ p_i, p_j \in \mathbb{R}^{d'}, \ U_Q \in \mathbb{R}^{d' \times d'_Q}, \ U_K \in \mathbb{R}^{d' \times d'_K}$$, $d' < d$,

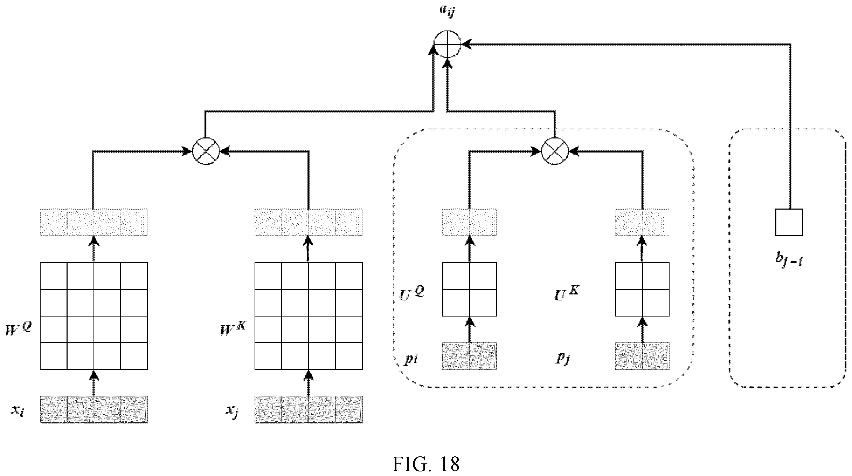

$d'_Q < d_Q$, and $d'_K < d_k$. FIG. 18 shows a calculation process in the case 4. A large dashed-line box indicates a process of calculating an absolute positional correlation.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + b_{j-i} \qquad (6)$$

Case 5:

During calculation of a correlation between position information of the first subdata and position information of the second subdata, a vector A (indicating an absolute position of the first subdata in the target data) corresponding to the first subdata is processed by using a transformation matrix A to obtain first intermediate output, a vector C (indicating an absolute position of the second subdata in the target data) corresponding to the second subdata is processed by using a transformation matrix C to obtain second intermediate output, and a first correlation between the first intermediate output and the second intermediate output is obtained, where the first correlation indicates a correlation between absolute position information of the first subdata in the target data and absolute position information of the second subdata in the target data.

During calculation of the correlation between the position information of the first subdata and the position information of the second subdata, a vector E (indicating a position of the first subdata in the target data relative to the second subdata) corresponding to the first subdata is further processed by using a transformation matrix E to obtain first intermediate output, a vector F (indicating a position of the second subdata in the target data relative to the first subdata) corresponding to the second subdata is processed by using a transformation matrix F to obtain second intermediate output, and a first correlation between the first intermediate output and the second intermediate output is obtained, where the first correlation indicates a correlation between relative position information of the first subdata in the target data and relative position information of the second subdata in the target data.

During calculation of a correlation between semantic information of the first subdata and semantic information of the second subdata, a vector B (indicating the semantic information of the first subdata) corresponding to the first subdata is processed by using a transformation matrix B to obtain third intermediate output, a vector D (indicating the semantic information of the second subdata) corresponding to the second subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the second subdata.

A size of the transformation matrix A is equal to a size of the transformation matrix B, and a size of the transformation matrix C is equal to a size of the transformation matrix D. A size of the transformation matrix E is less than the size of the transformation matrix B, and a size of the transformation matrix F is less than the size of the transformation matrix D.

A formula (9) provides a solution for calculating a correlation between relative position information, where

$$x_i, x_j \in \mathbb{R}^d, \ W_Q \in \mathbb{R}^{d \times d_Q}, \ W_K \in \mathbb{R}^{d \times d_k}, \ r_{i-j}, r_{j-i} \in \mathbb{R}^{d'}$$, $r_{i-j}$ and $r_{j-i}$ indicate a relative positional distance from i to j and a relative positional distance from j to i respectively, $V_Q \in \mathbb{R}^{d' \times d'_Q}, \ V_K \in \mathbb{R}^{d' \times d'_K}$, $d' < d$,

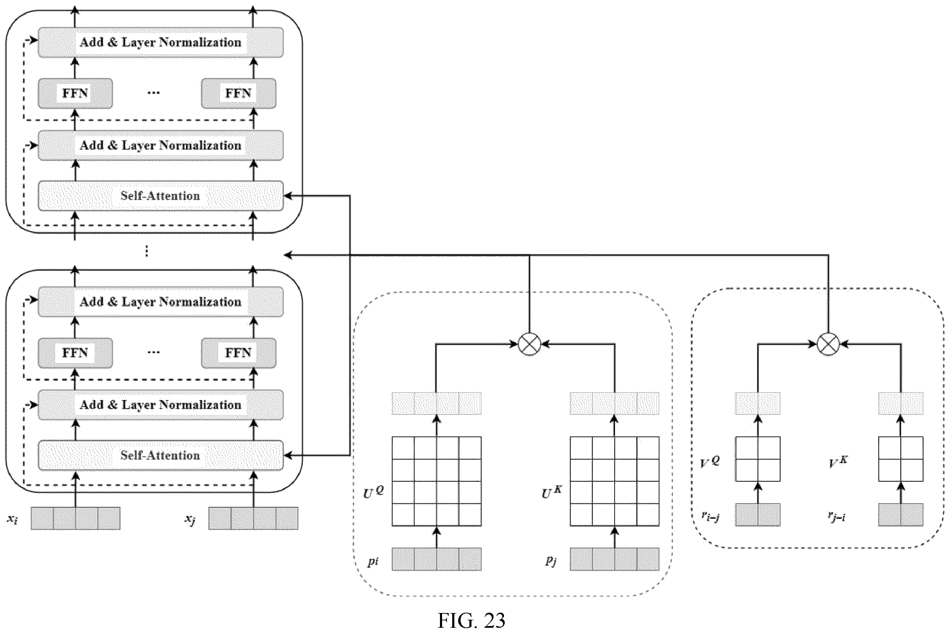

$d'_Q < d_Q$, and $d'_K < d_k$. FIG. 23 shows a process of calculating a correlation between relative positions. A dashed-line box on the right indicates a process of calculating a correlation between relative positions.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + r_{i-j} V_Q V_K^{\mathrm{T}} r_{j-i}^{\mathrm{T}} \qquad (9)$$

Case 6:

During calculation of a correlation between position information of the first subdata and position information of the second subdata, a vector A (indicating an absolute position of the first subdata in the target data) corresponding to the first subdata is processed by using a transformation matrix A to obtain first intermediate output, a vector C (indicating an absolute position of the second subdata in the target data) corresponding to the second subdata is processed by using a transformation matrix C to obtain second intermediate output, and a first correlation between the first intermediate output and the second intermediate output is obtained, where the first correlation indicates a correlation between absolute position information of the first subdata in the target data and absolute position information of the second subdata in the target data.

During calculation of the correlation between the position information of the first subdata and the position information of the second subdata, a vector E (indicating a position of the first subdata in the target data relative to the second subdata) corresponding to the first subdata is further processed by using a transformation matrix E to obtain first intermediate output, a vector F (indicating a position of the second subdata in the target data relative to the first subdata) corresponding to the second subdata is processed by using a transformation matrix F to obtain second intermediate output, and a first correlation between the first intermediate output and the second intermediate output is obtained, where the first correlation indicates a correlation between relative position information of the first subdata in the target data and relative position information of the second subdata in the target data.

During calculation of a correlation between semantic information of the first subdata and semantic information of the second subdata, a vector B (indicating the semantic information of the first subdata) corresponding to the first subdata is processed by using a transformation matrix B to obtain third intermediate output, a vector D (indicating the semantic information of the second subdata) corresponding to the second subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the second subdata.

A size of the transformation matrix A is less than a size of the transformation matrix B, and a size of the transformation matrix C is less than a size of the transformation matrix D. A size of the transformation matrix E is equal to the size of the transformation matrix B, and a size of the transformation matrix F is equal to the size of the transformation matrix D.

Case 7:

During calculation of a correlation between position information of the first subdata and position information of the second subdata, a vector E (indicating a position of the first subdata in the target data relative to the second subdata) corresponding to the first subdata is further processed by using a transformation matrix E to obtain first intermediate output, a vector F (indicating a position of the second subdata in the target data relative to the first subdata) corresponding to the second subdata is processed by using a transformation matrix F to obtain second intermediate output, and a first correlation between the first intermediate output and the second intermediate output is obtained, where the first correlation indicates a correlation between relative position information of the first subdata in the target data and relative position information of the second subdata in the target data.

During calculation of the correlation between the position information of the first subdata and the position information of the second subdata, a correlation between absolute position information of the first subdata in the target data and absolute position information of the second subdata in the target data may be further represented by a trainable scalar.

During calculation of a correlation between semantic information of the first subdata and semantic information of the second subdata, a vector B (indicating the semantic information of the first subdata) corresponding to the first subdata is processed by using a transformation matrix B to obtain third intermediate output, a vector D (indicating the semantic information of the second subdata) corresponding to the second subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the second subdata.

A size of the transformation matrix E is less than a size of the transformation matrix B, and a size of the transformation matrix F is less than a size of the transformation matrix D.

Case 8:

During calculation of a correlation between position information of the first subdata and position information of the second subdata, a correlation between absolute position information of the first subdata in the target data and absolute position information of the second subdata in the target data may be further represented by a trainable scalar.

During calculation of the correlation between the position information of the first subdata and the position information of the second subdata, a correlation between relative position information of the first subdata in the target data and relative position information of the second subdata in the target data may be further represented by a trainable scalar.

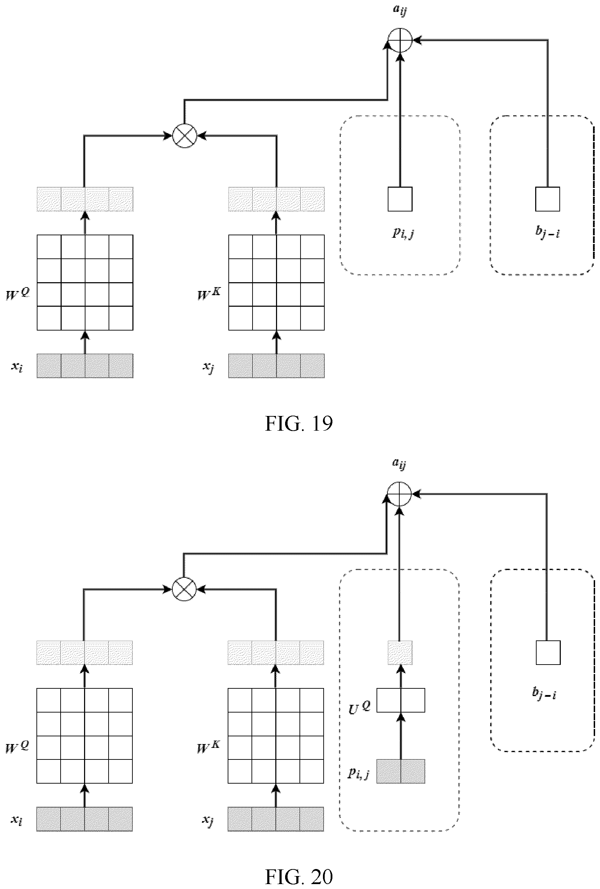

A formula (8) provides a solution for calculating a correlation between absolute position information, where $x_i, x_j \in \mathbb{R}^d$, and $p_{i,j}$ is a scalar that indicates a correlation between absolute positions i and j and that has directivity, to be specific, $p_{i,j} \neq p_{j,i}$. FIG. 19 shows a process of calculating an absolute positional correlation. A dashed-line box on the left indicates a process of calculating an absolute positional correlation.

$$q_i k_j^{\mathrm{T}} = x_i W_Q W_K^{\mathrm{T}} x_j^{\mathrm{T}} + p_{i,j} + b_{j-i} \qquad (8)$$

In a possible implementation, during calculation of a correlation between position information of a plurality of pieces of subdata, a corresponding position vector may be set for each group of subdata.

In a possible implementation, the target data further includes third subdata different from the first subdata. For example, the plurality of pieces of subdata include the first subdata and the third subdata. One vector (for example, a first vector) may be set to represent position information (relative positions or absolute positions) of the first subdata and the third subdata. To be specific, the first vector corresponds to position information of the first subdata in the target data and position information of the third subdata in the target data.

In a possible implementation, the position information includes an absolute position of the first subdata in the target data and an absolute position of the third subdata in the target data.

In a possible implementation, the position information includes a relative position of the first subdata in the target data relative to the third subdata, and a relative position of the third subdata in the target data relative to the first subdata.

In a possible implementation, the target header is specifically used to process, through the first transformation matrix, the first vector corresponding to the first subdata, to obtain fifth intermediate output, where the fifth intermediate output indicates a fourth correlation between the position information of the first subdata in the target data and the position information of the third subdata in the target data.

In this embodiment of this application, a corresponding transformation matrix may be correspondingly set for a position vector of a group of subdata. To be specific, only one position vector and one transformation matrix corresponding to the position vector are used for calculating a correlation between position information of a group of subdata. For example, a corresponding transformation matrix (the first transformation matrix) may be correspondingly set for a position vector (the first vector) of a group of subdata (the first subdata and the third subdata).

It should be understood that, in a possible implementation, during calculation of a correlation between position information of a plurality of pieces of subdata, a corresponding position vector and a corresponding transformation matrix may be set for each group of subdata, and a size of the transformation matrix may be consistent with a size of a transformation matrix used for calculating a correlation between semantic information.

In the foregoing manner, compared with the conventional technology in which a positional correlation between subdata is not calculated or a correlation between positions is indicated by a scalar, in this embodiment of this application, a correlation between positions is still obtained by performing an operation on a transformation matrix and a position vector, so that accuracy of a correlation between subdata can be increased, and a model convergence speed during training can be increased. In addition, during calculation of a correlation between positions, a quantity of transformation matrices used for calculating a correlation between position information is reduced, to reduce computing resource overheads of the transformer model during inference or training.

The following provides several embodiments.

Case 9:

During calculation of a correlation between position information of the first subdata and position information of the third subdata, a vector G (indicating absolute positions of the first subdata and the third subdata in the target data) corresponding to the first subdata and the third subdata is processed by using a transformation matrix G to obtain fifth intermediate output, where the fifth intermediate output indicates a fourth correlation between absolute position information of the first subdata in the target data and absolute position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix G is less than or equal to a size of the transformation matrix B.

Case 10:

During calculation of a correlation between position information of the first subdata and position information of the third subdata, a vector G (indicating absolute positions of the first subdata and the third subdata in the target data) corresponding to the first subdata and the third subdata is processed by using a transformation matrix G to obtain fifth intermediate output, where the fifth intermediate output indicates a fourth correlation between absolute position information of the first subdata in the target data and absolute position information of the third subdata in the target data.

During calculation of the correlation between the position information of the first subdata and the position information of the third subdata, a vector E (indicating a position of the first subdata in the target data relative to the third subdata) corresponding to the first subdata is further processed by using a transformation matrix E to obtain first intermediate output, a vector F (indicating a position of the third subdata in the target data relative to the first subdata) corresponding to the third subdata is processed by using a transformation matrix F to obtain second intermediate output, and a first correlation between the first intermediate output and the second intermediate output is obtained, where the first correlation indicates a correlation between relative position information of the first subdata in the target data and relative position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix G is less than or equal to a size of the transformation matrix B. A size of the transformation matrix E is equal to the size of the transformation matrix B, and a size of the transformation matrix F is equal to a size of the transformation matrix D.

Case 11:

During calculation of a correlation between position information of the first subdata and position information of the third subdata, a vector G (indicating absolute positions of the first subdata and the third subdata in the target data) corresponding to the first subdata and the third subdata is processed by using a transformation matrix G to obtain fifth intermediate output, where the fifth intermediate output indicates a fourth correlation between absolute position information of the first subdata in the target data and absolute position information of the third subdata in the target data.

During calculation of the correlation between the position information of the first subdata and the position information of the third subdata, a vector E (indicating a position of the first subdata in the target data relative to the third subdata) corresponding to the first subdata is further processed by using a transformation matrix E to obtain first intermediate output, a vector F (indicating a position of the third subdata in the target data relative to the first subdata) corresponding to the third subdata is processed by using a transformation matrix F to obtain second intermediate output, and a first correlation between the first intermediate output and the second intermediate output is obtained, where the first correlation indicates a correlation between relative position information of the first subdata in the target data and relative position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix G is less than or equal to a size of the transformation matrix B. A size of the transformation matrix E is less than the size of the transformation matrix B, and a size of the transformation matrix F is less than a size of the transformation matrix D.

Case 12:

During calculation of a correlation between position information of the first subdata and position information of the third subdata, a vector G (indicating absolute positions of the first subdata and the third subdata in the target data) corresponding to the first subdata and the third subdata is processed by using a transformation matrix G to obtain fifth intermediate output, where the fifth intermediate output indicates a fourth correlation between absolute position information of the first subdata in the target data and absolute position information of the third subdata in the target data.

During calculation of the correlation between the position information of the first subdata and the position information of the third subdata, a correlation between relative position information of the first subdata in the target data and relative position information of the third subdata in the target data may be further represented by a trainable scalar.

A size of the transformation matrix G is less than or equal to a size of the transformation matrix B.

A formula (7) provides a solution for calculating a correlation between absolute position information, where

$$x_i, x_j \in \mathbb{R}^d, \ W_Q \in \mathbb{R}^{d \times d_Q}, \ W_K \in \mathbb{R}^{d \times d_k}, \ p_{i,j} \in \mathbb{R}^{d'}$$ , $p_{i,j}$ is a joint representation vector for absolute positions i and j and has directivity, to be specific, $p_{i,j} \neq p_{j,i}$, $U_Q \in \mathbb{R}^{d' \times d'_Q}$ , $d' < d$, and $d'_Q < d_Q$ . FIG. 20 shows a calculation process of calculating a correlation between absolute positions. A dashed-line box on the left indicates a calculation process of calculating a correlation between absolute positions.

$$q_i k_j^{\mathrm{T}} = x_i W_Q W_K^{\mathrm{T}} x_j^{\mathrm{T}} + p_{i,j} U_Q + b_{j-i} \qquad (7)$$

Case 13:

During calculation of a correlation between position information of the first subdata and position information of the third subdata, a vector G (indicating absolute positions of the first subdata and the third subdata in the target data) corresponding to the first subdata and the third subdata is processed by using a transformation matrix G to obtain fifth intermediate output, where the fifth intermediate output indicates a fourth correlation between absolute position information of the first subdata in the target data and absolute position information of the third subdata in the target data.

During calculation of the correlation between the position information of the first subdata and the position information of the third subdata, a vector H (indicating a relative position of the first subdata in the target data relative to the third subdata, and a relative position of the third subdata in the target data relative to the first subdata) corresponding to the first subdata and the third subdata is processed by using a transformation matrix H to obtain sixth intermediate output, where the sixth intermediate output indicates a fifth correlation between relative position information of the first subdata in the target data and relative position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix G is less than or equal to a size of the transformation matrix B. A size of the transformation matrix H is less than or equal to the size of the transformation matrix B.

A formula (9) provides a solution for calculating a correlation between relative position information, where

$$x_i, x_j \in \mathbb{R}^d, \ W_Q \in \mathbb{R}^{d \times d_Q}, \ W_K \in \mathbb{R}^{d \times d_k}, \ r_{i-j}, r_{j-i} \in \mathbb{R}^{d'}$$ , $r_{i\text{-}j}$ and $r_{j\text{-}i}$ indicate a relative positional distance from i to j and a relative positional distance from j to i respectively, $V_Q \in \mathbb{R}^{d' \times d'_Q}, \ V_K \in \mathbb{R}^{d' \times d'_K}$ , $d' < d$,

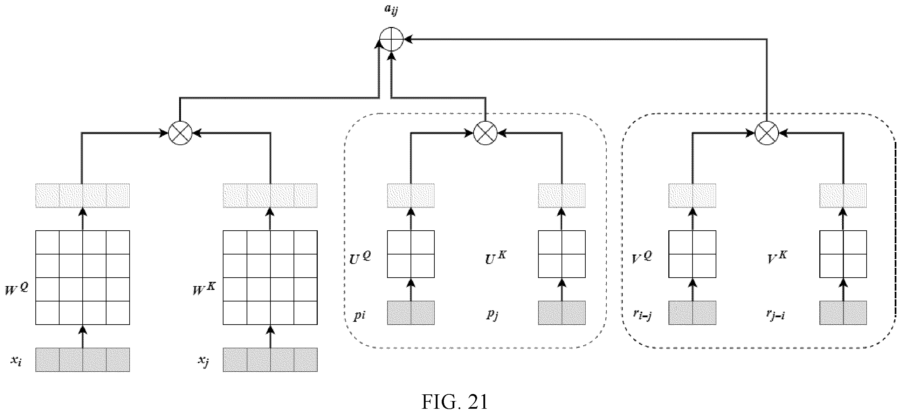

$d'_Q < d_Q$ , and $d'_K < d_k$ . FIG. 21 shows a process of calculating a correlation between relative positions. A dashed-line box on the right indicates a process of calculating a correlation between relative positions.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + r_{i-j} V_Q V_K^{\mathrm{T}} r_{j-i}^{\mathrm{T}} \qquad (9)$$

Case 14:

During calculation of a correlation between position information of the first subdata and position information of the third subdata, a vector H (indicating a relative position of the first subdata in the target data relative to the third subdata, and a relative position of the third subdata in the target data relative to the first subdata) corresponding to the first subdata and the third subdata is processed by using a transformation matrix H to obtain sixth intermediate output, where the sixth intermediate output indicates a fifth correlation between relative position information of the first subdata in the target data and relative position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix H is less than or equal to a size of the transformation matrix B.

Case 15:

During calculation of a correlation between position information of the first subdata and position information of the third subdata, a vector A (indicating an absolute position of the first subdata in the target data) corresponding to the first subdata is processed by using a transformation matrix A to obtain first intermediate output, a vector C (indicating an absolute position of the third subdata in the target data) corresponding to the third subdata is processed by using a transformation matrix C to obtain third intermediate output, and a first correlation between the first intermediate output and the third intermediate output is obtained, where the first correlation indicates a correlation between absolute position information of the first subdata in the target data and absolute position information of the third subdata in the target data.

During calculation of the correlation between the position information of the first subdata and the position information of the third subdata, a vector H (indicating a relative position of the first subdata in the target data relative to the third subdata, and a relative position of the third subdata in the target data relative to the first subdata) corresponding to the first subdata and the third subdata is processed by using a transformation matrix H to obtain sixth intermediate output, where the sixth intermediate output indicates a fifth correlation between relative position information of the first subdata in the target data and relative position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix H is less than or equal to a size of the transformation matrix B. A size of the transformation matrix A is equal to the size of the transformation matrix B, and a size of the transformation matrix C is equal to the size of the transformation matrix B.

Case 16:

During calculation of a correlation between position information of the first subdata and position information of the third subdata, a vector A (indicating an absolute position of the first subdata in the target data) corresponding to the first subdata is processed by using a transformation matrix A to obtain first intermediate output, a vector C (indicating an absolute position of the third subdata in the target data) corresponding to the third subdata is processed by using a transformation matrix C to obtain third intermediate output, and a first correlation between the first intermediate output and the third intermediate output is obtained, where the first correlation indicates a correlation between absolute position information of the first subdata in the target data and absolute position information of the third subdata in the target data.

During calculation of the correlation between the position information of the first subdata and the position information of the third subdata, a vector H (indicating a relative position of the first subdata in the target data relative to the third subdata, and a relative position of the third subdata in the target data relative to the first subdata) corresponding to the first subdata and the third subdata is processed by using a transformation matrix H to obtain sixth intermediate output, where the sixth intermediate output indicates a fifth correlation between relative position information of the first subdata in the target data and relative position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix H is less than or equal to a size of the transformation matrix B. A size of the transformation matrix A is less than the size of the transformation matrix B, and a size of the transformation matrix C is less than the size of the transformation matrix B.

A formula (10) provides a solution for calculating a correlation between relative positions, where

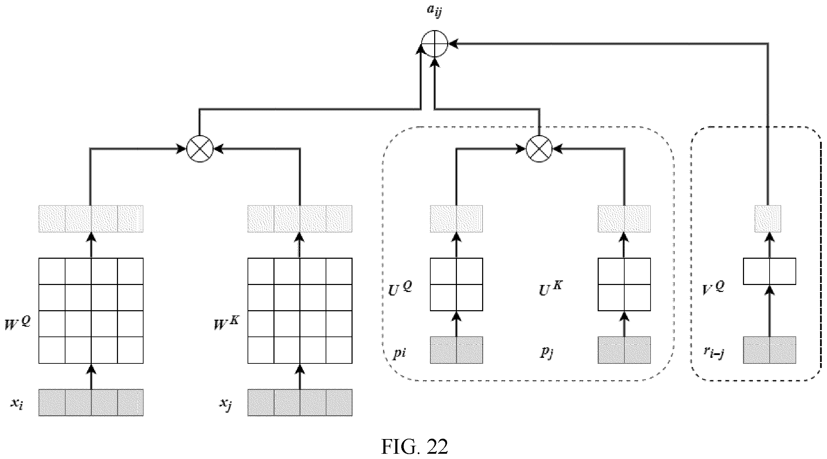

$$x_i, x_j \in \mathbb{R}^d, \ W_Q \in \mathbb{R}^{d \times d_Q}, \ W_K \in \mathbb{R}^{d \times d_k}, \ r_{i-j} \in \mathbb{R}^{d'}, \ V_Q \in \mathbb{R}^{d' \times d_Q'}$$ , d' < d, and $$d_Q' < d_Q$$ . FIG. 22 shows a calculation process of calculating a correlation between relative positions. A dashed-line box on the right indicates a calculation process of calculating a correlation between relative positions.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + r_{i-j} V_Q \qquad (10)$$

Case 17:

During calculation of a correlation between position information of the first subdata and position information of the third subdata, a correlation between absolute position information of the first subdata in the target data and absolute position information of the third subdata in the target data may be further represented by a trainable scalar.

During calculation of the correlation between the position information of the first subdata and the position information of the third subdata, a vector H (indicating a relative position of the first subdata in the target data relative to the third subdata, and a relative position of the third subdata in the target data relative to the first subdata) corresponding to the first subdata and the third subdata is processed by using a transformation matrix H to obtain sixth intermediate output, where the sixth intermediate output indicates a fifth correlation between relative position information of the first subdata in the target data and relative position information of the third subdata in the target data.

During calculation of a correlation between semantic information of the first subdata and semantic information of the third subdata, a vector B (indicating the semantic information of the first subdata) corresponding to the first subdata is processed by using a transformation matrix B to obtain third intermediate output, a vector D (indicating the semantic information of the third subdata) corresponding to the third subdata is processed by using a transformation matrix D to obtain fourth intermediate output, and a second correlation between the third intermediate output and the fourth intermediate output is obtained, where the second correlation indicates the correlation between the semantic information of the first subdata and the semantic information of the third subdata.

A size of the transformation matrix H is less than or equal to a size of the transformation matrix B.

An embodiment of this application provides a data processing method. The method includes: obtaining target data, where the target data includes first subdata; and processing the target data through a target neural network to obtain a data processing result, where the target neural network includes an attention layer, the attention layer includes a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix. In this embodiment of this application, a matrix size of a transformation matrix corresponding to a position vector is set to be less than a size of a matrix corresponding to a semantic vector. To be specific, the size of the first transformation matrix is less than the size of the second transformation matrix. Compared with the conventional technology in which a positional correlation between subdata is not calculated or a correlation between positions is indicated by a scalar, in this embodiment of this application, a correlation between positions is still obtained by performing an operation on a transformation matrix and a position vector, so that accuracy of a correlation between subdata can be increased, and a model convergence speed during training can be increased. In addition, during calculation of a correlation between positions, a size of a transformation matrix used for calculating a correlation between position information is reduced, to reduce computing resource overheads of a transformer model during inference or training.

The following describes several practical structures of the target neural network by using an example in which the target neural network is a pre-trained language model.

In a possible implementation, a model structure of a pre-trained language model berf-large is modified by using the method in this embodiment of this application, bert-large has a total of 24 layers, and an input token vector has 1024 dimensions. Absolute positional encoding also has 1024 dimensions. A calculation process for $q_i k_j^{\mathrm{T}}$ in an attention score $a_{i,j}$ in an attention module of bert-large is changed to that shown in a formula (11), where $x_i, x_j \in \mathbb{R}^{1024}$, $p_i, p_j \in \mathbb{R}^{1024}$, and $r_{i-j}, r_{j-i} \in \mathbb{R}^{128}$. FIG. 23 shows a corresponding process.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + r_{i-j} V_Q V_K^{\mathrm{T}} r_{j-i}^{\mathrm{T}} \qquad (11)$$

Compared with a conventional solution, in modified bert-large, at least 30% of training steps can be saved during training to a specified accuracy of 71.2 based on a training dataset.

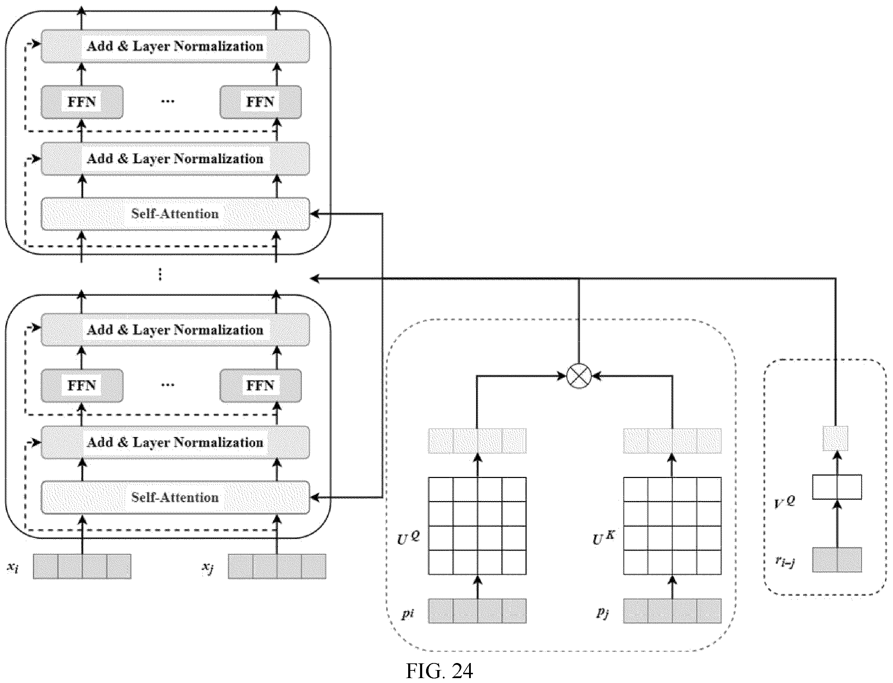

In a possible implementation, a model structure of a pre-trained language model berf-large is modified by using the method in this embodiment of this application, bert-large has a total of 24 layers, and an input token vector has 1024 dimensions. Absolute positional encoding also has 1024 dimensions. A calculation process for $q_i k_j^{\mathrm{T}}$ in an attention score $a_{i,j}$ in an attention module of bert-large is changed to that shown in a formula (12), where $x_i, x_j \in \mathbb{R}^{1024}$, $p_i, p_j \in \mathbb{R}^{1024}$, and $r_{i-j} \in \mathbb{R}^{128}$. FIG. 24 shows a corresponding calculation process.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + r_{i-j} V_Q \qquad (12)$$

Compared with a conventional solution, in modified bert-large, 25% of training steps can be saved during training to a specified accuracy of 71.2 based on a training dataset.

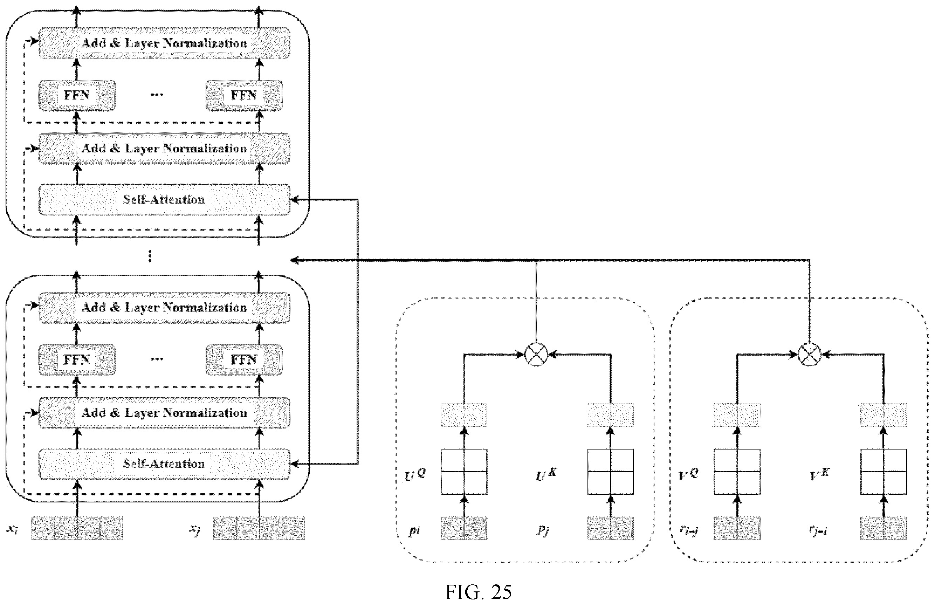

In a possible implementation, a model structure of a pre-trained language model berf-large is modified by using the method in this embodiment of this application, bert-large has a total of 24 layers, and an input token vector has 1024 dimensions. Absolute positional encoding also has 1024 dimensions. A calculation process for $q_i k_j^{\mathrm{T}}$ in an attention score $a_{i,j}$ in an attention module of bert-large is changed to that shown in a formula (13), where $x_i, x_j \in \mathbb{R}^{1024}$, $p_i, p_j \in \mathbb{R}^{128}$, and $r_{i-j}, r_{j-i} \in \mathbb{R}^{128}$. FIG. 25 shows a corresponding calculation process.

$$q_i k_j^{\mathrm{T}} = x_i W_Q W_K^{\mathrm{T}} x_j^{\mathrm{T}} + p_i U_Q U_K^{\mathrm{T}} p_j^{\mathrm{T}} + r_{i-j} V_Q V_K^{\mathrm{T}} r_{j-i}^{\mathrm{T}} \qquad (13)$$

Compared with a conventional solution, in modified bert-large, 30% of training steps can be saved during training to a specified accuracy of 71.2 based on a training dataset.

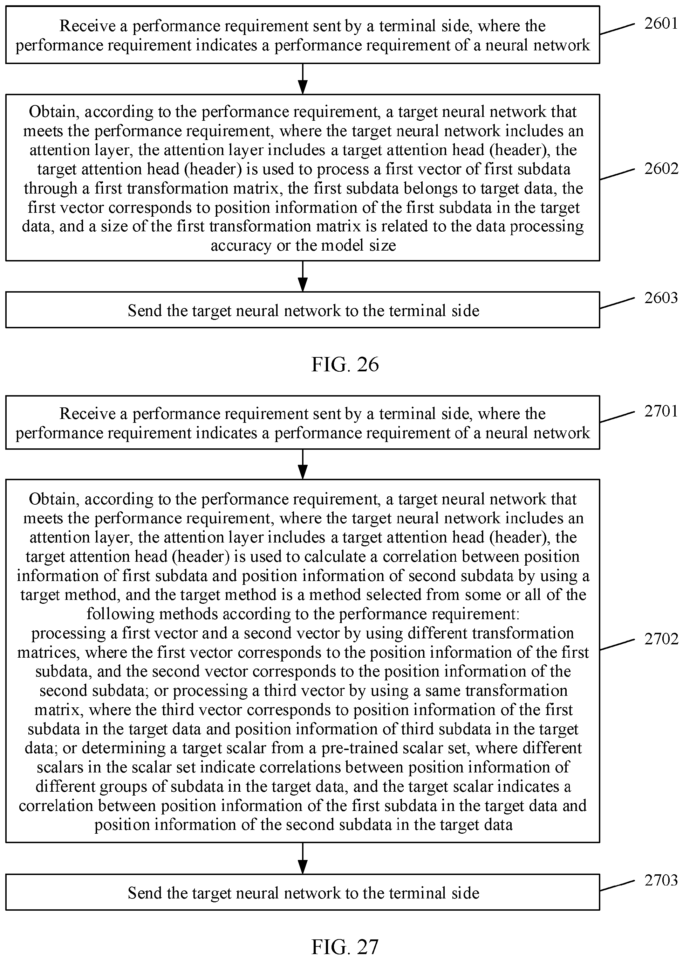

FIG. 26 is a diagram of an embodiment of a data processing method according to an embodiment of this application. The data processing method provided in this embodiment of this application may be used in a cloud-side server. As shown in FIG. 26, the data processing method provided in this embodiment of this application may include the following steps.

2601: Receive a performance requirement sent by a terminal side, where the performance requirement indicates a performance requirement of a neural network.

In a possible implementation, the performance requirement includes at least one of the following: data processing accuracy, a model size, and a type of an implemented task.

In this embodiment of this application, a terminal device may send a performance requirement of the terminal device to the cloud-side server.

Specifically, the terminal device may send the performance requirement to the cloud-side server, where the performance requirement includes but is not limited to at least one of an accuracy requirement, a delay requirement, and a type of an implemented task, and then the cloud-side server may obtain the performance requirement.

In a possible implementation, a target neural network is used to implement at least one of the following types of tasks:

reading comprehension, text translation, paraphrase recognition, named entity recognition, text-based sentiment analysis, natural language inference, automatic text-based question answering, text intent recognition, text classification, text simplification, or text-based story generation.

2602: Obtain, according to the performance requirement, a target neural network that meets the performance requirement, where the target neural network includes an attention layer, the attention layer includes a target attention head (header), the target attention head (header) is used to process a first vector of first subdata through a first transformation matrix, the first subdata belongs to target data, the first vector corresponds to position information of the first subdata in the target data, and a size of the first transformation matrix is related to the data processing accuracy or the model size.

It can be learned from the foregoing embodiment that, when the size of the first transformation matrix is less than a size of a second transformation matrix, a size of a transformation matrix used for calculating a correlation between position information is reduced, to reduce computing resource overheads of a model during inference or training. However, a smaller size of a matrix leads to a corresponding decrease of accuracy of the model.

In this embodiment of this application, a model that meets a user requirement for accuracy and/or a model size may be obtained according to a specific user requirement through searching by adjusting a size of a transformation matrix.

In a possible implementation, the target attention head (header) may be any header in the target neural network. The foregoing transformation matrix search process may be performed on each header in the target neural network.

In a possible implementation, the target attention head (header) is further used to process a second vector of the first subdata through a second transformation matrix, the second vector corresponds to semantic information of the first subdata, and the size of the first transformation matrix is less than a size of the second transformation matrix.

In a possible implementation, the target data further includes second subdata different from the first subdata; and

the first vector corresponds to an absolute position of the first subdata in the target data; or
the first vector corresponds to a relative position of the first subdata in the target data relative to the second subdata; or
the first vector corresponds to an absolute position of the first subdata in the target data and an absolute position of the second subdata in the target data; or
the first vector corresponds to a relative position of the first subdata in the target data relative to the second subdata, and a relative position of the second subdata in the target data relative to the first subdata.

For specific descriptions of the target header in step 2602, refer to the descriptions in the foregoing embodiments. Details are not described herein again.

2603: Send the target neural network to the terminal side.

After obtaining the target neural network, the cloud-side server may send the target neural network back to user equipment. Then the user equipment may perform inference by using a model (the target neural network) returned by the cloud side. During model inference, the user equipment may obtain the target data, and process the target data by using the target neural network to obtain a processing result.

FIG. 27 is a diagram of an embodiment of a data processing method according to an embodiment of this application. The data processing method provided in this embodiment of this application may be used in a cloud-side server. As shown in FIG. 27, the data processing method provided in this embodiment of this application may include the following steps.

2701: Receive a performance requirement sent by a terminal side, where the performance requirement indicates a performance requirement of a neural network, and the performance requirement includes at least one of the following: data processing accuracy and a model size.

In a possible implementation, the performance requirement includes at least one of the following: data processing accuracy, a model size, and a type of an implemented task.

In this embodiment of this application, a terminal device may send a performance requirement of the terminal device to the cloud-side server.

Specifically, the terminal device may send the performance requirement to the cloud-side server, where the performance requirement includes but is not limited to at least one of an accuracy requirement, a delay requirement, and a type of an implemented task, and then the cloud-side server may obtain the performance requirement.

In a possible implementation, a target neural network is used to implement at least one of the following types of tasks:

reading comprehension, text translation, paraphrase recognition, named entity recognition, text-based sentiment analysis, natural language inference, automatic text-based question answering, text intent recognition, text classification, text simplification, or text-based story generation.

2702: Obtain, according to the performance requirement, a target neural network that meets the performance requirement, where the target neural network includes an attention layer, the attention layer includes a target attention head (header), the target attention head (header) is used to calculate a correlation between position information of first subdata and position information of second subdata by using a target method, and the target method is a method selected from some or all of the following methods according to the performance requirement:

processing a first vector and a second vector by using different transformation matrices, where the first vector corresponds to the position information of the first subdata, and the second vector corresponds to the position information of the second subdata; or

processing a third vector by using a same transformation matrix, where the third vector corresponds to position information of the first subdata in the target data and position information of third subdata in the target data; or determining a target scalar from a pre-trained scalar set, where different scalars in the scalar set indicate correlations between position information of different groups of subdata in the target data, and the target scalar indicates a correlation between position information of the first subdata in the target data and position information of the second subdata in the target data.

It can be learned from the foregoing embodiment that, when one corresponding position vector and one transformation matrix are set for each group of subdata, a quantity of transformation matrices used for calculating a correlation between position information can be reduced, to reduce computing resource overheads of a model during inference or training. However, a smaller quantity of matrices leads to a corresponding decrease of accuracy of the model.

It can be learned from the foregoing embodiment that, when a corresponding position vector and a corresponding transformation matrix are set for each piece of subdata in each group of subdata, although a quantity of transformation matrices used for calculating a correlation between position information cannot be reduced, a larger quantity of matrices contributes to a corresponding increase of accuracy of the model.

It can be learned from the foregoing embodiment that, when a correlation between position information is represented by a trainable target scalar, computing resource overheads of the model during inference or training can be reduced, but accuracy of the model correspondingly decreases.

In this embodiment of this application, a model that meets a user requirement for accuracy and/or a model size may be obtained according to a specific user requirement by searching for a header processing mode.

2703: Send the target neural network to the terminal side.

After obtaining the target neural network, the cloud-side server may send the target neural network back to user equipment. Then the user equipment may perform inference by using a model (the target neural network) returned by the cloud side. During model inference, the user equipment may obtain the target data, and process the target data by using the target neural network to obtain a processing result.

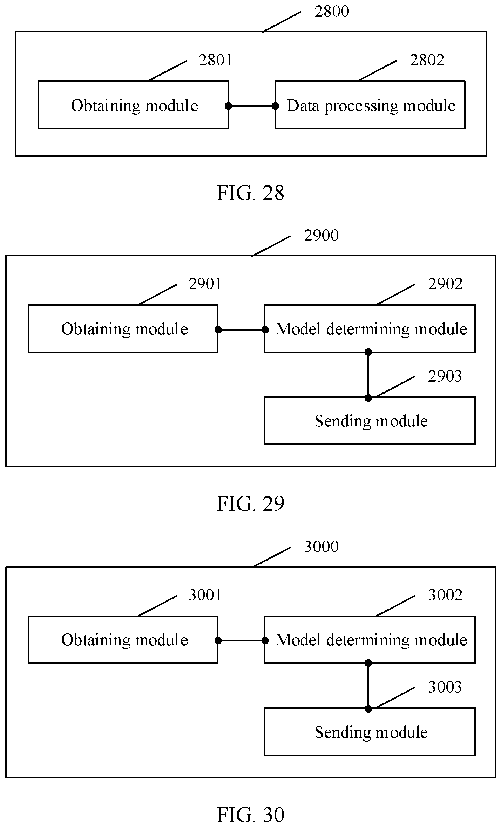

FIG. 28 is a diagram of an embodiment of a data processing apparatus according to an embodiment of this application. The data processing apparatus provided in this embodiment of this application may be used in an execution device or a training device. The execution device or the training device may be a terminal device, for example, a mobile phone, a tablet computer, a notebook computer, or an intelligent wearable device. Alternatively, the execution device or the training device may be a cloud-side server. As shown in FIG. 28, the data processing apparatus provided in this embodiment of this application includes the following modules.

An obtaining module 2801 is configured to obtain target data, where the target data includes first subdata.

For specific descriptions of the obtaining module 2801, refer to the descriptions of step 1101 in the foregoing embodiments. Details are not described herein again.

A data processing module 2802 is configured to process the target data through a target neural network to obtain a data processing result, where the target neural network includes an attention layer, the attention layer includes a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix.

For specific descriptions of the data processing module 2802, refer to the descriptions of step 1101 in the foregoing embodiments. Details are not described herein again.

In a possible implementation, the target data is text data, and the first data is a word unit or a phrase unit; or the target data is image data, and the first data is image block data.

In a possible implementation, the target data further includes second subdata different from the first subdata;

the target header is specifically used to process, through the first transformation matrix, the first vector corresponding to the first subdata, to obtain first intermediate output; and
the target header is further used to: process, through a third transformation matrix, a third vector corresponding to the second subdata, to obtain second intermediate output, where the third vector corresponds to position information of the second subdata in the target data; and
obtain a first correlation between the first intermediate output and the second intermediate output, where the first correlation indicates a correlation between the position information of the first subdata in the target data and the position information of the second subdata in the target data.

In a possible implementation, a size of the third transformation matrix is less than the size of the second transformation matrix.

In a possible implementation, the size of the first transformation matrix is the same as the size of the third transformation matrix.

In a possible implementation, the target header is specifically used to process, through the second transformation matrix, the second vector corresponding to the first subdata, to obtain third intermediate output; and

the target header is further used to: process, through a fourth transformation matrix, a fourth vector corresponding to the second subdata, to obtain fourth intermediate output, where the fourth vector corresponds to semantic information of the second subdata; and

obtain a second correlation between the third intermediate output and the fourth intermediate output, where the second correlation indicates a correlation between the semantic information of the first subdata and the semantic information of the second subdata.

In a possible implementation, the first vector corresponds to an absolute position of the first subdata in the target data.

In a possible implementation, the first vector corresponds to a relative position of the first subdata in the target data relative to the second subdata; and/or

the third vector corresponds to a relative position of the second subdata in the target data relative to the first subdata.

In a possible implementation, the target header is further used to determine a target scalar from a pre-trained scalar set, where

different scalars in the scalar set indicate correlations between absolute positions of different groups of subdata in the target data, and the target scalar indicates a third correlation between an absolute position of the first subdata in the target data and an absolute position of the second subdata in the target data.

In a possible implementation, the target data further includes third subdata different from the first subdata, and the first vector corresponds to position information of the first subdata in the target data and position information of the third subdata in the target data.

In a possible implementation, the target header is specifically used to process, through the first transformation matrix, the first vector corresponding to the first subdata, to obtain fifth intermediate output, where the fifth intermediate output indicates a fourth correlation between the position information of the first subdata in the target data and the position information of the second subdata in the target data.

In a possible implementation, the position information includes an absolute position of the first subdata in the target data and an absolute position of the third subdata in the target data; or

the position information includes a relative position of the first subdata in the target data relative to the second subdata, and a relative position of the second subdata in the target data relative to the first subdata.

In a possible implementation, the size of the first transformation matrix is less than a half of the size of the second transformation matrix.

FIG. 29 is a diagram of an embodiment of a data processing apparatus according to an embodiment of this application. The data processing apparatus provided in this embodiment of this application may be used in a cloud-side server. As shown in FIG. 29, the data processing apparatus provided in this embodiment of this application may include the following modules.

An obtaining module 2901 is configured to receive a performance requirement sent by a terminal side, where the performance requirement indicates a performance requirement of a neural network, and the performance requirement includes at least one of the following: data processing accuracy and a model size.

For specific descriptions of the obtaining module 2901, refer to the descriptions of step 2601 in the foregoing embodiments. Details are not described herein again.

A model determining module 2902 is configured to obtain, according to the performance requirement, a target neural network that meets the performance requirement, where the target neural network includes an attention layer, the attention layer includes a target attention head (header), the target attention head (header) is used to process a first vector of first subdata through a first transformation matrix, the first subdata belongs to target data, the first vector corresponds to position information of the first subdata in the target data, and a size of the first transformation matrix is related to the data processing accuracy or the model size.

For specific descriptions of the model determining module 2902, refer to the descriptions of step 2602 in the foregoing embodiments. Details are not described herein again.

A sending module 2903 is configured to send the target neural network to the terminal side.

For specific descriptions of the sending module 2903, refer to the descriptions of step 2603 in the foregoing embodiments. Details are not described herein again.

In a possible implementation, the target attention head (header) is further used to process a second vector of the first subdata through a second transformation matrix, the second vector corresponds to semantic information of the first subdata, and the size of the first transformation matrix is less than a size of the second transformation matrix.

In a possible implementation, the target data further includes second subdata different from the first subdata; and

the first vector corresponds to an absolute position of the first subdata in the target data; or
the first vector corresponds to a relative position of the first subdata in the target data relative to the second subdata; or
the first vector corresponds to an absolute position of the first subdata in the target data and an absolute position of the second subdata in the target data; or
the first vector corresponds to a relative position of the first subdata in the target data relative to the second subdata, and a relative position of the second subdata in the target data relative to the first subdata.

FIG. 30 is a diagram of an embodiment of a data processing apparatus according to an embodiment of this application. The data processing apparatus provided in this embodiment of this application may be used in a cloud-side server. As shown in FIG. 30, the data processing apparatus provided in this embodiment of this application may include the following modules.

An obtaining module 3001 is configured to receive a performance requirement sent by a terminal side, where the performance requirement indicates a performance requirement of a neural network, and the performance requirement includes at least one of the following: data processing accuracy and a model size.

For specific descriptions of the obtaining module 3001, refer to the descriptions of step 2701 in the foregoing embodiments. Details are not described herein again.

A model determining module 3002 is configured to obtain, according to the performance requirement, a target neural network that meets the performance requirement, where the target neural network includes an attention layer, the attention layer includes a target attention head (header), the target attention head (header) is used to calculate a correlation between position information of first subdata and position information of second subdata by using a target apparatus, and the target apparatus is an apparatus selected from at least one of the following apparatuses according to the performance requirement:

processing a first vector and a second vector by using different transformation matrices, where the first vector corresponds to the position information of the first subdata, and the second vector corresponds to the position information of the second subdata; or

processing a third vector by using a same transformation matrix, where the third vector corresponds to position information of the first subdata in the target data and position information of third subdata in the target data; or

determining a target scalar from a pre-trained scalar set, where different scalars in the scalar set indicate correlations between position information of different groups of subdata in the target data, and the target scalar indicates a correlation between position information of the first subdata in the target data and position information of the second subdata in the target data.

For specific descriptions of the model determining module 3002, refer to the descriptions of step 2702 in the foregoing embodiments. Details are not described herein again.

A sending module 3003 is configured to send the target neural network to the terminal side.

For specific descriptions of the sending module 3003, refer to the descriptions of step 2703 in the foregoing embodiments. Details are not described herein again.

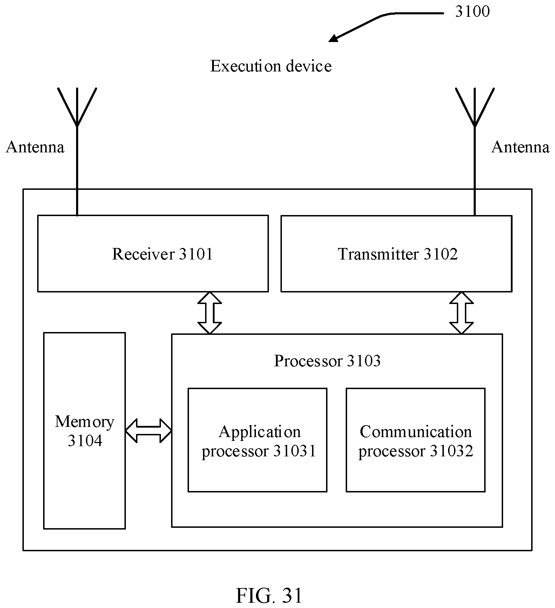

The following describes an execution device provided in embodiments of this application. FIG. 31 is a diagram of a structure of an execution device according to an embodiment of this application. The execution device 3100 may be specifically a virtual reality VR device, a mobile phone, a tablet computer, a notebook computer, an intelligent wearable device, a monitoring data processing device, a server, or the like. This is not limited herein. Specifically, the execution device 3100 includes a receiver 3101, a transmitter 3102, a processor 3103 (there may be one or more processors 3103 in the execution device 3100, and one processor is used as an example in FIG. 31), and a memory 3104. The processor 3103 may include an application processor 31031 and a communication processor 31032. In some embodiments of this application, the receiver 3101, the transmitter 3102, the processor 3103, and the memory 3104 may be connected through a bus or in another manner.

The memory 3104 may include a read-only memory and a random access memory, and provide instructions and data for the processor 3103. A part of the memory 3104 may further include a non-volatile random access memory (non-volatile random access memory, NVRAM). The memory 3104 stores a processor and operation instructions, an executable module or a data structure, a subnet thereof, or an extended set thereof. The operation instructions may include various operation instructions for implementing various operations.

The processor 3103 controls an operation of the execution device. In specific application, the components of the execution device are coupled together through a bus system. In addition to a data bus, the bus system may further include a power bus, a control bus, a status signal bus, and the like. However, for clarity of description, various buses are marked as the bus system in the figure.

The methods disclosed in the foregoing embodiments of this application may be used in the processor 3103 or implemented by the processor 3103. The processor 3103 may be an integrated circuit chip and has a signal processing capability. During implementation, steps in the foregoing methods may be performed by a hardware integrated logic circuit in the processor 3103 or through instructions in a form of software. The processor 3103 may be a general-purpose processor, a digital signal processor (digital signal processor, DSP), a microprocessor, or a microcontroller. The processor 3103 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 3103 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 3104, and the processor 3103 reads information in the memory 3104 and performs the steps of the foregoing methods based on hardware of the processor 3103.

The receiver 3101 may be configured to receive input digit or character information, and generate signal input related to related settings and function control of the execution device. The transmitter 3102 may be configured to output digit or character information. The transmitter 3102 may be further configured to send an instruction to a disk group to modify data in the disk group.

In this embodiment of this application, in a case, the processor 3103 is configured to perform the data processing method (for example, a step of performing model inference through a target neural network) performed by the execution device in the foregoing embodiments.

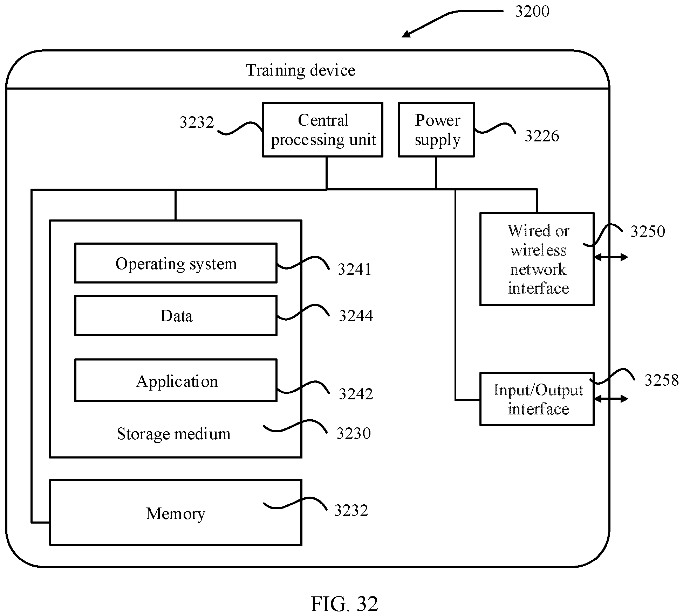

An embodiment of this application further provides a training device. FIG. 32 is a diagram of a structure of a training device according to an embodiment of this application. Specifically, the training device 3200 is implemented by one or more servers. The training device 3200 may vary greatly due to different configurations or performance, and may include one or more central processing units (central processing units, CPU) 3232 (for example, one or more processors), a memory 3232, and one or more storage media 3230 (for example, one or more mass storage devices) for storing an application 3242 or data 3244. The memory 3232 and the storage medium 3230 may be transient storage or persistent storage. A program stored in the storage medium 3230 may include one or more modules (not shown in the figure), and each module may include a series of instruction operations for the training device. Further, the central processing unit 3232 may be configured to communicate with the storage medium 3230, and perform, on the training device 3200, a series of instruction operations in the storage medium 3230.

The training device 3200 may further include one or more power supplies 3226, one or more wired or wireless network interfaces 3250, one or more input/output interfaces 3258, or one or more operating systems 3241, for example, Windows ServerTM, Mac OS XTM, UnixTM, LinuxTM, or FreeBSDTM.

In this embodiment of this application, the central processing unit 3232 is configured to perform the methods in the embodiments corresponding to FIG. 26 and FIG. 27.

An embodiment of this application further provides a computer program product. When the computer program product is run on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. For example, the processing unit may be a processor, and the communication unit may be an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit that is in the radio access device and that is located outside the chip, for example, a read-only memory (read-only memory, ROM), another type of static storage device capable of storing static information and instructions, or a random access memory (random access memory, RAM).

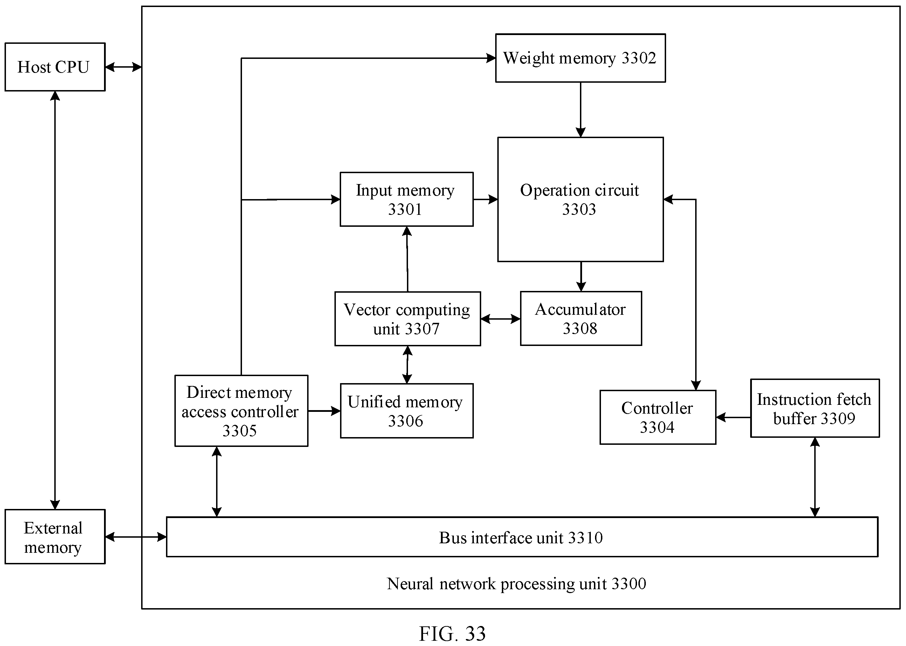

Specifically, FIG. 33 is a diagram of a structure of a chip according to an embodiment of this application. The chip may be a neural network processing unit NPU 3300. The NPU 3300 is mounted to a host CPU (Host CPU) as a coprocessor, and the host CPU allocates a task. A core part of the NPU is an operation circuit 3303, and a controller 3304 controls the operation circuit 3303 to extract matrix data in a memory and perform a multiplication operation.

In some implementations, the operation circuit 3303 internally includes a plurality of process engines (Process Engine, PE). In some implementations, the operation circuit 3303 is a two-dimensional systolic array. Alternatively, the operation circuit 3303 may be a one-dimensional systolic array or another electronic circuit that can perform mathematical operations such as multiplication and addition. In some implementations, the operation circuit 3303 is a general-purpose matrix processor.

For example, it is assumed that there are an input matrix A, a weight matrix B, and an output matrix C. The operation circuit obtains data corresponding to the matrix B from a weight memory 3302, and buffers the data to each PE in the operation circuit. The operation circuit obtains data of the matrix A from an input memory 3301, and performs a matrix operation on the matrix B and the data of the matrix A. Partial results or final results of a matrix that are obtained are stored in an accumulator (accumulator) 3308.

The unified memory 3306 is configured to store input data and output data. Weight data is directly transferred to the weight memory 3302 through a direct memory access controller (Direct Memory Access Controller, DMAC) 3305. Input data is also transferred to the unified memory 3306 through the DMAC.

A BIU is a bus interface unit, namely, a bus interface unit 3310, and is used for interaction between an AXI bus, and the DMAC and an instruction fetch buffer (Instruction Fetch Buffer, IFB) 3309.

The bus interface unit (Bus Interface Unit, BIU for short) 3310 is used for the instruction fetch buffer 3309 to obtain instructions from an external memory, and is further used for the direct memory access controller 3305 to obtain original data of the input matrix A or the weight matrix B from the external memory.

The DMAC is mainly configured to transfer input data in the external memory DDR to the unified memory 3306, transfer weight data to the weight memory 3302, or transfer input data to the input memory 3301.

A vector computing unit 3307 includes a plurality of operation processing units, and if required, performs further processing, for example, vector multiplication, vector addition, an exponential operation, a logarithm operation, or a magnitude comparison, on output of the operation circuit. The vector computing unit 3307 is mainly used for network calculation, for example, batch normalization (batch normalization), pixel-level summation, or upsampling on a feature plane, at a non-convolutional/fully-connected layer of a neural network.

In some implementations, the vector computing unit 3307 can store a vector of processed output to the unified memory 3306. For example, the vector computing unit 3307 may apply a linear function or a non-linear function to output of the operation circuit 3303, for example, perform linear interpolation on a feature plane extracted by a convolutional layer, or for another example, use a vector of an accumulated value to generate an activation value. In some implementations, the vector computing unit 3307 generates a normalized value, a value obtained through pixel-level summation, or both. In some implementations, the vector of the processed output can be used as activation input to the operation circuit 3303, for example, for use at a subsequent layer of the neural network.

The instruction fetch buffer (instruction fetch buffer) 3309 connected to the controller 3304 is configured to store instructions to be used by the controller 3304.

The unified memory 3306, the input memory 3301, the weight memory 3302, and the instruction fetch buffer 3309 are all on-chip memories. The external memory is private to a hardware architecture of the NPU.

Any aforementioned processor may be a central processing unit, a microprocessor, an ASIC, or one or more integrated circuits for controlling execution of the foregoing programs.

In addition, it should be noted that the apparatus embodiments described above are merely examples. The units described as separate parts may or may not be physically separate, and parts shown as units may or may not be physical units, that is, may be located in one place, or may be distributed on a plurality of network units. Some or all of the modules may be selected according to actual requirements to achieve objectives of solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware, and a same function may also be implemented by various specific hardware structures, for example, an analog circuit, a digital circuit, or a dedicated circuit. However, in this application, an implementation by using a software program is a better implementation in most cases. Based on such an understanding, technical solutions of this application essentially, or a part contributing to the conventional technology may be implemented in a form of a software product. The computer software product is stored in a readable storage medium, for example, a floppy disk of a computer, a USB flash drive, a removable hard disk, a ROM, a RAM, a magnetic disk, or an optical disc, and includes several instructions for instructing a computer device (which may be a personal computer, a training device, a network device, or the like) to perform all or some of methods in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored on the computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like.

**Claims**

1. A data processing method, wherein the method comprises:

   obtaining target data, wherein the target data comprises first subdata; and
   processing the target data through a target neural network to obtain a data processing result, wherein the target neural network comprises an attention layer, the attention layer comprises a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix.

2. The method according to claim 1, wherein the target data is text data, and the first data is a word unit or a phrase unit; or

   the target data is image data, and the first data is image block data; or
   the target data is audio data, and the first data is audio segment data.

3. The method according to claim 1 or 2, wherein the target data further comprises second subdata different from the first subdata;

   the target header is specifically used to process, through the first transformation matrix, the first vector corresponding to the first subdata, to obtain first intermediate output; and
   the target header is further used to: process, through a third transformation matrix, a third vector corresponding to the second subdata, to obtain second intermediate output, wherein the third vector corresponds to position information of the second subdata in the target data; and
   obtain a first correlation between the first intermediate output and the second intermediate output, wherein the first correlation indicates a correlation between the position information of the first subdata in the target data and the position information of the second subdata in the target data.

4. The method according to claim 3, wherein a size of the third transformation matrix is less than the size of the second transformation matrix.

5. The method according to claim 3 or 4, wherein the size of the first transformation matrix is the same as the size of the third transformation matrix.

6. The method according to any one of claims 1 to 5, wherein

   the target header is specifically used to process, through the second transformation matrix, the second vector corresponding to the first subdata, to obtain third intermediate output; and

the target header is further used to: process, through a fourth transformation matrix, a fourth vector corresponding to the second subdata, to obtain fourth intermediate output, wherein the fourth vector corresponds to semantic information of the second subdata; and

obtain a second correlation between the third intermediate output and the fourth intermediate output, wherein the second correlation indicates a correlation between the semantic information of the first subdata and the semantic information of the second subdata.

7. The method according to any one of claims 1 to 6, wherein the first vector corresponds to an absolute position of the first subdata in the target data.

8. The method according to any one of claims 3 to 6, wherein the first vector corresponds to a relative position of the first subdata in the target data relative to the second subdata; and/or
the third vector corresponds to a relative position of the second subdata in the target data relative to the first subdata.

9. The method according to claim 8, wherein the target header is further used to determine a target scalar from a pre-trained scalar set, wherein
different scalars in the scalar set indicate correlations between absolute positions of different groups of subdata in the target data, and the target scalar indicates a third correlation between an absolute position of the first subdata in the target data and an absolute position of the second subdata in the target data.

10. The method according to claim 1 or 2, wherein the target data further comprises third subdata different from the first subdata, and the first vector corresponds to position information of the first subdata in the target data and position information of the third subdata in the target data.

11. The method according to claim 10, wherein the target header is specifically used to process, through the first transformation matrix, the first vector corresponding to the first subdata, to obtain fifth intermediate output, wherein the fifth intermediate output indicates a fourth correlation between the position information of the first subdata in the target data and the position information of the third subdata in the target data.

12. The method according to claim 10 or 11, wherein the position information comprises an absolute position of the first subdata in the target data and an absolute position of the third subdata in the target data; or
the position information comprises a relative position of the first subdata in the target data relative to the third subdata, and a relative position of the third subdata in the target data relative to the first subdata.

13. The method according to any one of claims 1 to 12, wherein the size of the first transformation matrix is less than a half of the size of the second transformation matrix.

14. A data processing method, wherein the method comprises:

receiving a performance requirement sent by a terminal side, wherein the performance requirement indicates a performance requirement of a neural network, and the performance requirement comprises at least one of the following: data processing accuracy and a model size;
obtaining, according to the performance requirement, a target neural network that meets the performance requirement, wherein the target neural network comprises an attention layer, the attention layer comprises a target attention head (header), the target attention head (header) is used to process a first vector of first subdata through a first transformation matrix, the first subdata belongs to target data, the first vector corresponds to position information of the first subdata in the target data, and a size of the first transformation matrix is related to the data processing accuracy or the model size; and
sending the target neural network to the terminal side.

15. The method according to claim 14, wherein the target attention head (header) is further used to process a second vector of the first subdata through a second transformation matrix, the second vector corresponds to semantic information of the first subdata, and the size of the first transformation matrix is less than a size of the second transformation matrix.

16. The method according to claim 14 or 15, wherein the target data further comprises second subdata different from the first subdata; and

the first vector corresponds to an absolute position of the first subdata in the target data; or

the first vector corresponds to a relative position of the first subdata in the target data relative to the second subdata; or

the first vector corresponds to an absolute position of the first subdata in the target data and an absolute position of the second subdata in the target data; or

the first vector corresponds to a relative position of the first subdata in the target data relative to the second subdata, and a relative position of the second subdata in the target data relative to the first subdata.

17. A data processing method, wherein the method comprises:

receiving a performance requirement sent by a terminal side, wherein the performance requirement indicates a performance requirement of a neural network, and the performance requirement comprises at least one of the following: data processing accuracy and a model size;

obtaining, according to the performance requirement, a target neural network that meets the performance requirement, wherein the target neural network comprises an attention layer, the attention layer comprises a target attention head (header), the target attention head (header) is used to calculate a correlation between position information of first subdata and position information of second subdata by using a target method, and the target method is a method selected from at least one of the following methods according to the performance requirement:

processing a first vector and a second vector by using different transformation matrices, wherein the first vector corresponds to the position information of the first subdata, and the second vector corresponds to the position information of the second subdata; or

processing a third vector by using a same transformation matrix, wherein the third vector corresponds to position information of the first subdata in the target data and position information of third subdata in the target data; or

determining a target scalar from a pre-trained scalar set, wherein different scalars in the scalar set indicate correlations between position information of different groups of subdata in the target data, and the target scalar indicates a correlation between position information of the first subdata in the target data and position information of the second subdata in the target data; and

sending the target neural network to the terminal side.

18. A data processing apparatus, wherein the apparatus comprises:

an obtaining module, configured to obtain target data, wherein the target data comprises first subdata; and

a data processing module, configured to process the target data through a target neural network to obtain a data processing result, wherein the target neural network comprises an attention layer, the attention layer comprises a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix.

19. The apparatus according to claim 18, wherein the target data is text data, and the first data is a word unit or a phrase unit; or

the target data is image data, and the first data is image block data.

20. The apparatus according to claim 18 or 19, wherein the target data further comprises second subdata different from the first subdata;

the target header is specifically used to process, through the first transformation matrix, the first vector corresponding to the first subdata, to obtain first intermediate output; and

the target header is further used to: process, through a third transformation matrix, a third vector corresponding to the second subdata, to obtain second intermediate output, wherein the third vector corresponds to position information of the second subdata in the target data; and

obtain a first correlation between the first intermediate output and the second intermediate output, wherein the first correlation indicates a correlation between the position information of the first subdata in the target data and the position information of the second subdata in the target data.

21. The apparatus according to claim 20, wherein a size of the third transformation matrix is less than the size of the second transformation matrix.

22. The apparatus according to claim 20 or 21, wherein the size of the first transformation matrix is the same as the size of the third transformation matrix.

23. The apparatus according to any one of claims 18 to 22, wherein

the target header is specifically used to process, through the second transformation matrix, the second vector corresponding to the first subdata, to obtain third intermediate output; and
the target header is further used to: process, through a fourth transformation matrix, a fourth vector corresponding to the second subdata, to obtain fourth intermediate output, wherein the fourth vector corresponds to semantic information of the second subdata; and
obtain a second correlation between the third intermediate output and the fourth intermediate output, wherein the second correlation indicates a correlation between the semantic information of the first subdata and the semantic information of the second subdata.

24. The apparatus according to any one of claims 18 to 23, wherein the first vector corresponds to an absolute position of the first subdata in the target data.

25. The apparatus according to any one of claims 20 to 23, wherein the first vector corresponds to a relative position of the first subdata in the target data relative to the second subdata; and/or
the third vector corresponds to a relative position of the second subdata in the target data relative to the first subdata.

26. The apparatus according to claim 25, wherein the target header is further used to determine a target scalar from a pre-trained scalar set, wherein
different scalars in the scalar set indicate correlations between absolute positions of different groups of subdata in the target data, and the target scalar indicates a third correlation between an absolute position of the first subdata in the target data and an absolute position of the second subdata in the target data.

27. The apparatus according to claim 18 or 19, wherein the target data further comprises third subdata different from the first subdata, and the first vector corresponds to position information of the first subdata in the target data and position information of the third subdata in the target data.

28. The apparatus according to claim 27, wherein the target header is specifically used to process, through the first transformation matrix, the first vector corresponding to the first subdata, to obtain fifth intermediate output, wherein the fifth intermediate output indicates a fourth correlation between the position information of the first subdata in the target data and the position information of the third subdata in the target data.

29. The apparatus according to claim 27 or 28, wherein the position information comprises an absolute position of the first subdata in the target data and an absolute position of the third subdata in the target data; or
the position information comprises a relative position of the first subdata in the target data relative to the third subdata, and a relative position of the third subdata in the target data relative to the first subdata.

30. The apparatus according to any one of claims 18 to 29, wherein the size of the first transformation matrix is less than a half of the size of the second transformation matrix.

31. A data processing apparatus, wherein the apparatus comprises:

an obtaining module, configured to receive a performance requirement sent by a terminal side, wherein the performance requirement indicates a performance requirement of a neural network, and the performance requirement comprises at least one of the following: data processing accuracy and a model size;
a model determining module, configured to obtain, according to the performance requirement, a target neural network that meets the performance requirement, wherein the target neural network comprises an attention layer, the attention layer comprises a target attention head (header), the target attention head (header) is used to process a first vector of first subdata through a first transformation matrix, the first subdata belongs to target data, the first vector corresponds to position information of the first subdata in the target data, and a size of the first transformation matrix is related to the data processing accuracy or the model size; and

a sending module, configured to send the target neural network to the terminal side.

32. The apparatus according to claim 31, wherein the target attention head (header) is further used to process a second vector of the first subdata through a second transformation matrix, the second vector corresponds to semantic information of the first subdata, and the size of the first transformation matrix is less than a size of the second transformation matrix.

33. The apparatus according to claim 31 or 32, wherein the target data further comprises second subdata different from the first subdata; and

the first vector corresponds to an absolute position of the first subdata in the target data; or
the first vector corresponds to a relative position of the first subdata in the target data relative to the second subdata; or
the first vector corresponds to an absolute position of the first subdata in the target data and an absolute position of the second subdata in the target data; or
the first vector corresponds to a relative position of the first subdata in the target data relative to the second subdata, and a relative position of the second subdata in the target data relative to the first subdata.

34. A data processing apparatus, wherein the apparatus comprises:

receiving a performance requirement sent by a terminal side, wherein the performance requirement indicates a performance requirement of a neural network, and the performance requirement comprises at least one of the following: data processing accuracy and a model size;
obtaining, according to the performance requirement, a target neural network that meets the performance requirement, wherein the target neural network comprises an attention layer, the attention layer comprises a target attention head (header), the target attention head (header) is used to calculate a correlation between position information of first subdata and position information of second subdata by using a target apparatus, and the target apparatus is an apparatus selected from at least one of the following apparatuses according to the performance requirement:

processing a first vector and a second vector by using different transformation matrices, wherein the first vector corresponds to the position information of the first subdata, and the second vector corresponds to the position information of the second subdata; or
processing a third vector by using a same transformation matrix, wherein the third vector corresponds to position information of the first subdata in the target data and position information of third subdata in the target data; or
determining a target scalar from a pre-trained scalar set, wherein different scalars in the scalar set indicate correlations between position information of different groups of subdata in the target data, and the target scalar indicates a correlation between position information of the first subdata in the target data and position information of the second subdata in the target data; and
sending the target neural network to the terminal side.

35. A data processing apparatus, wherein the apparatus comprises a memory and a processor, the memory stores code, and the processor is configured to obtain the code and perform the method according to any one of claims 1 to 17.

36. A computer-readable storage medium, comprising computer-readable instructions, wherein when the computer-readable instructions are run on a computer device, the computer device is enabled to perform the method according to any one of claims 1 to 17.

37. A computer program product, comprising computer-readable instructions, wherein when the computer-readable instructions are run on a computer device, the computer device is enabled to perform the method according to any one of claims 1 to 17.

IT value chain

Intelligent information chain

Intelligent products and industry application

Translation/Text analysis/...

Speech/Vision/Image/...

Data processing:

Data training/Machine learning/Deep learning

Search/Inference/Decision-making

Data

Infrastructure

Sensor

Intelligent chip

Infrastructure platform

FIG. 1

44

Performance
requirement

User
equipment

Search result

Neural
network
search
system
(server)
100

## FIG. 2

**Search result (target
neural network) 160**

**Neural network search system 100**

Quality assessment
engine 150

Training engine
140

Candidate selection
engine 130

**Performance
requirement 103**

**Training data
102**

**Verification
data 104**

## FIG. 3

| | Interaction interface | | |
| --- | --- | --- | --- |

| Neural network search request | Search result (target neural network) | ... |

| Memory | Processor | Data training/Machine learning/Deep learning | Search/Inference/ Decision-making | ... |

Neural network search device (server)

User

User equipment

FIG. 4

FIG. 5

FIG. 6

FIG. 7

300

Data storage system 350

Execution device 310

...

Communication network

Local device 301

Local device 302

Examples

FIG. 8

FIG. 9

FIG. 10

Obtain target data, where the target data includes first subdata — 1101

Process the target data through a target neural network to obtain a data processing result, where the target neural network includes an attention layer, the attention layer includes a target attention head (header), the target header is used to process, through a first transformation matrix, a first vector corresponding to the first subdata, and process, through a second transformation matrix, a second vector corresponding to the first subdata, the first vector corresponds to position information of the first subdata in the target data, the second vector corresponds to semantic information of the first subdata, and a size of the first transformation matrix is less than a size of the second transformation matrix — 1102

FIG. 11a

Neural network model

Transformer layer

...

Transformer layer

Embedding layer

FIG. 11b

FIG. 12

FIG. 13

$a_{ij}$

$W^Q$  $W^K$

$x_i$  $x_j$

$p_i$  $p_j$

FIG. 14

$a_{ij}$

$W^Q$  $W^K$

$x_i$  $x_j$

$b_{j-i}$

FIG. 15

FIG. 16

FIG. 17

FIG. 18

FIG. 19

FIG. 20

FIG. 21

FIG. 22

FIG. 23

FIG. 24

FIG. 25

Receive a performance requirement sent by a terminal side, where the performance requirement indicates a performance requirement of a neural network — 2601

Obtain, according to the performance requirement, a target neural network that meets the performance requirement, where the target neural network includes an attention layer, the attention layer includes a target attention head (header), the target attention head (header) is used to process a first vector of first subdata through a first transformation matrix, the first subdata belongs to target data, the first vector corresponds to position information of the first subdata in the target data, and a size of the first transformation matrix is related to the data processing accuracy or the model size — 2602

Send the target neural network to the terminal side — 2603

FIG. 26

Receive a performance requirement sent by a terminal side, where the performance requirement indicates a performance requirement of a neural network — 2701

Obtain, according to the performance requirement, a target neural network that meets the performance requirement, where the target neural network includes an attention layer, the attention layer includes a target attention head (header), the target attention head (header) is used to calculate a correlation between position information of first subdata and position information of second subdata by using a target method, and the target method is a method selected from some or all of the following methods according to the performance requirement:
processing a first vector and a second vector by using different transformation matrices, where the first vector corresponds to the position information of the first subdata, and the second vector corresponds to the position information of the second subdata; or processing a third vector by using a same transformation matrix, where the third vector corresponds to position information of the first subdata in the target data and position information of third subdata in the target data; or determining a target scalar from a pre-trained scalar set, where different scalars in the scalar set indicate correlations between position information of different groups of subdata in the target data, and the target scalar indicates a correlation between position information of the first subdata in the target data and position information of the second subdata in the target data — 2702

Send the target neural network to the terminal side — 2703

FIG. 27

2800

Obtaining module 2801 —— Data processing module 2802

FIG. 28

2900

Obtaining module 2901 —— Model determining module 2902

Sending module 2903

FIG. 29

3000

Obtaining module 3001 —— Model determining module 3002

Sending module 3003

FIG. 30

3100

Execution device

Antenna

Antenna

| Receiver 3101 | Transmitter 3102 |
|---|---|

Processor 3103

| Memory 3104 | Application processor 31031 | Communication processor 31032 |
|---|---|---|

FIG. 31

3200

Training device

3232 — Central processing unit    Power supply ~ 3226

Operating system ~ 3241

Data ~ 3244

Application ~ 3242

Storage medium ~ 3230

Memory ~ 3232

Wired or wireless network interface ~ 3250

Input/Output interface ~ 3258

FIG. 32

EP 4 462 313 A1

Host CPU

Weight memory 3302

Input memory 3301

Operation circuit 3303

Vector computing unit 3307

Accumulator 3308

Direct memory access controller 3305

Unified memory 3306

Controller 3304

Instruction fetch buffer 3309

External memory

Bus interface unit 3310

Neural network processing unit 3300

FIG. 33

## INTERNATIONAL SEARCH REPORT

| International application No. |
| --- |
| **PCT/CN2023/072655** |

**A. CLASSIFICATION OF SUBJECT MATTER**

G06N 3/08(2023.01)i

According to International Patent Classification (IPC) or to both national classification and IPC

**B. FIELDS SEARCHED**

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNTXT, CNKI, ENTXT, DWPI: 目标, 神经网络, 层, 注意力头, 矩阵, 向量, 位置, 尺寸, 语义, 图像块, 音频, 关联度, target, neural network, layer, attention head, matrix, vector, location, size, semantic, patch, audio, association

**C. DOCUMENTS CONSIDERED TO BE RELEVANT**

| Category* | Citation of document, with indication, where appropriate, of the relevant passages | Relevant to claim No. |
| --- | --- | --- |
| A | CN 113505193 A (HUAWEI TECHNOLOGIES CO., LTD.) 15 October 2021 (2021-10-15) entire description | 1-37 |
| A | CN 112288075 A (HUAWEI TECHNOLOGIES CO., LTD.) 29 January 2021 (2021-01-29) entire description | 1-37 |
| A | CN 110263324 A (HUAWEI TECHNOLOGIES CO., LTD.; TSINGHUA UNIVERSITY) 20 September 2019 (2019-09-20) entire description | 1-37 |
| A | CN 110489567 A (CHONGQING UNIVERSITY OF POSTS AND TELECOMMUNICATIONS) 22 November 2019 (2019-11-22) entire description | 1-37 |
| A | CN 111368993 A (HUAWEI TECHNOLOGIES CO., LTD.) 03 July 2020 (2020-07-03) entire description | 1-37 |
| A | CN 113822282 A (TENCENT TECHNOLOGY (SHENZHEN) CO., LTD.) 21 December 2021 (2021-12-21) entire description | 1-37 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 March 2023** | **30 March 2023** |

| Name and mailing address of the ISA/CN | Authorized officer |
| --- | --- |
| **China National Intellectual Property Administration (ISA/CN)** China **No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2023/072655** |

**C. DOCUMENTS CONSIDERED TO BE RELEVANT**

| Category* | Citation of document, with indication, where appropriate, of the relevant passages | Relevant to claim No. |
| --- | --- | --- |
| A | EP 3333751 A1 (ALCATEL LUCENT) 13 June 2018 (2018-06-13) entire description | 1-37 |
| A | US 2021132949 A1 (ROBERT BOSCH GMBH) 06 May 2021 (2021-05-06) entire description | 1-37 |
| A | US 2021383199 A1 (GOOGLE L.L.C.) 09 December 2021 (2021-12-09) entire description | 1-37 |

Form PCT/ISA/210 (second sheet) (July 2022)

| INTERNATIONAL SEARCH REPORT | | | | International application No. | | | |
|---|---|---|---|---|---|---|---|
| Information on patent family members | | | | PCT/CN2023/072655 | | | |

| Patent document cited in search report | | | Publication date (day/month/year) | Patent family member(s) | | | Publication date (day/month/year) |
|---|---|---|---|---|---|---|---|
| CN | 113505193 | A | 15 October 2021 | WO | 2022253074 | A1 | 08 December 2022 |
| CN | 112288075 | A | 29 January 2021 | WO | 2022068627 | A1 | 07 April 2022 |
| CN | 110263324 | A | 20 September 2019 | WO | 2020228376 | A1 | 19 November 2020 |
| | | | | EP | 3964998 | A1 | 09 March 2022 |
| | | | | EP | 3964998 | A4 | 29 June 2022 |
| | | | | US | 2022147715 | A1 | 12 May 2022 |
| CN | 110489567 | A | 22 November 2019 | | None | | |
| CN | 111368993 | A | 03 July 2020 | US | 2022383078 | A1 | 01 December 2022 |
| | | | | WO | 2021159714 | A1 | 19 August 2021 |
| | | | | EP | 4089587 | A1 | 16 November 2022 |
| CN | 113822282 | A | 21 December 2021 | | None | | |
| EP | 3333751 | A1 | 13 June 2018 | | None | | |
| US | 2021132949 | A1 | 06 May 2021 | DE | 102020213076 | A1 | 06 May 2021 |
| | | | | US | 11429386 | B2 | 30 August 2022 |
| US | 2021383199 | A1 | 09 December 2021 | CN | 113486924 | A | 08 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210111721